# EUROPEAN PATENT APPLICATION

(11) **EP 4 637 115 A1**
(43) Date of publication of application: **22.10.2025**
(21) Application number: 25167997.3
(22) Date of filing: 02.04.2025
(51) Int. Cl.: H04L 67/10, H04L 67/12, H04L 67/51, H04L 67/56, G05B 19/418, H04L 67/566

(54) **SYSTEMS AND METHODS FOR GENERATING AND MAINTAINING INDUSTRIAL AUTOMATION DEVICE TWINS**

(30) Priority: 15.04.2024 US 202418635300
(71) Applicant: Rockwell Automation Technologies, Inc., Mayfield Heights, OH 44124 (US)
(72) Inventor: Case, Clark L., Mayfield Heights, OH, 44124 (US); Jasper, Taryl J., Mayfield Heights, OH, 44124 (US); Sumerauer, Douglas B., Mayfield Heights, OH, 44124 (US); Bliss, Ronald E., Mayfield Heights, OH, 44124 (US); Miller, Michael B., Mayfield Heights, OH, 44124 (US); Briant, Stephen C., Mayfield Heights, OH, 44124 (US); Anthony, Michael J., Mayfield Heights, OH, 44124 (US); Fonner, Kevin A., Mayfield Heights, OH, 44124 (US); Teal, James M., Mayfield Heights, OH, 44124 (US); Chung, Dukki, Mayfield Heights, OH, 44124 (US); Baddam, Sharath Chander Reddy, Mayfield Heights, OH, 44124 (US); Vitek, Roman, Mayfield Heights, OH, 44124 (US)
(74) Representative: Grünecker Patent- und Rechtsanwälte PartG mbB

(57) **Abstract**

A system includes processing circuitry and a memory, accessible by the processing circuitry, storing instructions that, when executed by the processing circuitry, cause the processing circuitry to receive discovery data including one or more characteristics of an industrial automation device of an industrial automation system configured to perform an industrial automation process, wherein the industrial automation device is communicatively coupled to an operational technology (OT) network, request, from a database, catalog data for the industrial automation device, and generate, based on the discovery data and the catalog data, a device twin for the industrial automation device, wherein the device twin comprises an interface by which one or more applications may interact with the industrial automation device.

## Description

### BACKGROUND

The present disclosure generally relates to managing communication between applications and industrial automation devices operating in operational technology (OT) environments.

Industrial automation systems may be used to provide automated control of one or more actuators in an industrial setting. OT networks may be used to communicatively couple industrial automation systems and/or industrial automation devices within an industrial automation system. One or more applications attempting to interact with an industrial automation device disposed in the OT environment via an OT network may result in multiple parallel communication channels and excessive communication traffic, which may slow the OT network and cause response times to increase. Accordingly, improved techniques for managing communication between applications and industrial automation devices are desired.

This section is intended to introduce the reader to aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In an embodiment, a system includes processing circuitry and a memory, accessible by the processing circuitry, storing instructions that, when executed by the processing circuitry, cause the processing circuitry to receive discovery data including one or more characteristics of an industrial automation device of an industrial automation system configured to perform an industrial automation process, wherein the industrial automation device is communicatively coupled to an operational technology (OT) network, request, from a database, catalog data for the industrial automation device, and generate, based on the discovery data and the catalog data, a device twin for the industrial automation device, wherein the device twin includes an interface by which one or more applications may interact with the industrial automation device.

In another embodiment, a method includes requesting discovery data from an industrial automation device of an industrial automation system configured to perform an industrial automation process, wherein the industrial automation device is communicatively coupled to an operational technology (OT) network, receiving the discovery data from the industrial automation device, wherein the discovery data includes one or more characteristics of the industrial automation device, requesting, from a database, catalog data for the industrial automation device, and generating, based on the discovery data and the catalog data, a device twin for the industrial automation device, wherein the device twin includes an interface by which one or more applications may interact with the industrial automation device.

In a further embodiment, a non-transitory computer readable medium stores instructions that, when executed by processing circuitry, cause the processing circuitry to request update data for an industrial automation device of an industrial automation system configured to perform an industrial automation process, wherein the industrial automation device is communicatively coupled to an operational technology (OT) network, receive the update data from the industrial automation device, wherein the update data includes one or more characteristics of the industrial automation device, and update, based on the update data, a device twin for the industrial automation device, wherein the device twin includes an interface by which one or more applications may interact with the industrial automation device.

In an embodiment, a system includes processing circuitry and a memory, accessible by the processing circuitry, storing instructions that, when executed by the processing circuitry, cause the processing circuitry to deploy a first device twin in a first computing environment, wherein the first device twin includes a first interface by which a first application interacts with an industrial automation device of an industrial automation system configured to perform an industrial automation process wherein the industrial automation device is communicatively coupled to an operational technology (OT) network, deploy a second device twin in a second computing environment, wherein the second device twin includes a second interface by which a second application interacts with the industrial automation device, receive updated data corresponding to the industrial automation device, and update the first and second device twins based on the received updated data.

In another embodiment, a method includes receiving discovery data including one or more characteristics of an industrial automation device of an industrial automation system configured to perform an industrial automation process, wherein the industrial automation device is communicatively coupled to an operational technology (OT) network, deploying a first device twin in a first computing environment based on the discovery data, wherein the first device twin includes a first interface by which a first application interacts with the industrial automation device, deploying a second device twin in a second computing environment based on the discovery data, wherein the second device twin includes a second interface by which a second application interacts with the industrial automation device, receiving updated data corresponding to the industrial automation device, and updating the first and second device twins based on the received data.

In a further embodiment, a non-transitory computer readable medium stores instructions that, when executed by processing circuitry, cause the processing circuitry to receive update data corresponding to an industrial automation device of an industrial automation system configured to perform an industrial automation process, update a first device twin in a first computing environment based on the update data, wherein the first device twin includes a first interface by which a first application interacts with the industrial automation device, and update a second device twin in a second computing environment based on the update data, wherein the second device twin includes a second interface by which a second application interacts with the industrial automation device.

In an embodiment, a system includes processing circuitry and a memory, accessible by the processing circuitry, storing instructions that, when executed by the processing circuitry, cause the processing circuitry to receive data from a device twin representative of an industrial automation device of an industrial automation system configured to perform an industrial automation process, wherein the industrial automation device is communicatively coupled to an operational technology (OT) network, wherein the device twin includes an interface by which one or more applications may interact with the industrial automation device, determine that the industrial automation device is accessible via a plurality of edge devices, apply one or more policies to select a particular edge device of the plurality of edge devices, and transmit the data to the particular edge device for transmission to the industrial automation device.

In another embodiment, a method includes receiving data from a device twin representative of an industrial automation device of an industrial automation system configured to perform an industrial automation process, wherein the device twin runs in a cloud environment and includes an interface by which one or more applications may interact with the industrial automation device, determining that the industrial automation device is accessible via a plurality of edge devices, applying one or more policies to select a particular edge device of the plurality of edge devices, and transmitting the data from the cloud environment to the particular edge device for transmission to the industrial automation device.

In a further embodiment, a non-transitory computer readable medium stores instructions that, when executed by processing circuitry, cause the processing circuitry to receive data being transmitted from an industrial automation device of an industrial automation system configured to perform an industrial automation process or a device twin representative of the industrial automation device, wherein the device twin includes an interface by which one or more applications may interact with the industrial automation device, determine that a plurality of edge device compute surfaces are available to perform an action on the received data, apply one or more policies to select a particular edge device compute surface of the plurality of edge device compute surfaces, and transmit the data to the particular edge device compute surface for performance of the action.

In an embodiment, a system includes processing circuitry and a memory, accessible by the processing circuitry, storing instructions that, when executed by the processing circuitry, cause the processing circuitry to receive data collected during operation of an industrial automation device of an industrial automation system configured to perform an industrial automation process, process the received data, including applying one or more rules to filter the received data, prioritize the received data, or both, and transmit the processed received data to a device twin for the industrial automation device, wherein the device twin includes an interface by which one or more applications may interact with the industrial automation device, wherein the device twin runs in a cloud environment.

In another embodiment, a method includes collecting data from an industrial automation device of an industrial automation system configured to perform an industrial automation process, processing the collected data, including applying one or more rules to filter the collected data, prioritize the collected data, or both, and transmitting the processed collected data to a device twin for the industrial automation device, wherein the device twin includes an interface by which one or more applications may interact with the industrial automation device.

In a further embodiment, a non-transitory computer readable medium stores instructions that, when executed by processing circuitry, cause the processing circuitry to receive data being transmitted between an industrial automation device of an industrial automation system configured to perform an industrial automation process and a device twin for the industrial automation device, wherein the device twin includes an interface by which one or more applications may interact with the industrial automation device, process the received data, including applying one or more rules to filter the received data, prioritize the received data, or both, and transmit the processed received data to the industrial automation device or to the device twin for the industrial automation device.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

These and other features, aspects, and advantages of the present embodiments will become better understood when the following detailed description is read with reference to the accompanying drawings in which like characters represent like parts throughout the drawings, wherein:
FIG. 1 is a schematic view of an industrial automation system, in accordance with embodiments presented herein;
FIG. 2 is a block diagram of example components that could be used in the industrial automation system of FIG. 1, in accordance with embodiments presented herein;
FIG. 3 is a perspective view of an example of the industrial automation system of FIG. 1 controlled by an industrial control system, in accordance with an embodiment;
FIG. 4 is a block diagram of an example operational technology (OT) network, including the industrial control system of FIG. 3 operating in an OT environment, that coordinates with a container orchestration system, in accordance with an embodiment;
FIG. 5 is a schematic view of an architecture for implementing device twins for industrial automation devices disposed in the OT environment of FIG. 4, in accordance with an embodiment;
FIG. 6 is a schematic illustrating use of the architecture of FIG. 5 for generating and maintaining the device twins, in accordance with an embodiment;
FIG. 7 is a flow chart of a process for generating a maintaining the device twins as shown in FIG. 6, in accordance with an embodiment;
FIG. 8 is a schematic illustrating device twin replication in multiple computing environments, in accordance with an embodiment;
FIG. 9 is a flow chart of a process for replicating data between the device twins running in different computing environments of FIG. 8, in accordance with an embodiment;
FIG. 10 is a schematic illustrating selection of an edge compute surface for accessing an OT device or performing computing operations in the OT environment of FIG. 4, in accordance with an embodiment;
FIG. 11 is a flow chart of a process for selecting the edge compute surfaces for performing the operations related to the industrial automation device twins of FIG. 10, in accordance with an embodiment, in accordance with an embodiment;
FIG. 12 is a schematic illustrating managing communication between the OT devices and device twins shown in FIG. 5, in accordance with an embodiment, in accordance with an embodiment; and
FIG. 13 is a flow chart of a process for managing the communication between the OT devices and the device twins of FIG. 12, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

One or more cloud-based applications attempting to interact with a physical industrial automation device disposed in an operational technology (OT) network may result in multiple parallel communication channels and excessive communication traffic, which may slow the OT network down and cause response times to increase. To address this problem, a device twin may be maintained in the cloud, on-prem in the OT network, or both. A device twin is a digital representation of a corresponding physical industrial automation device. The device twin acts as a common interface for cloud applications to interact with the respective industrial automation device by, for example, receiving data from, and sending commands and/or configuration changes to, the respective industrial automation device. The industrial automation device connects to the cloud via one or more edge interfaces (e.g., edge devices), which may be separate from, or integrated into, the respective industrial automation device. In some embodiments, a device twin may be running on the edge device in addition to in the cloud or in place of a device twin running in the cloud. A topology service may be used to identify industrial automation devices on the OT network. A catalog service may provide additional information about the identified industrial automation devices. A twin management service may create and manage the device twins based on data received from the edge devices, the topology service, and the catalog service. Accordingly, one or more cloud applications may interface with the device twins instead of the with real industrial automation device itself. A twin interface may communicate with the industrial automation device via the edge device to collect data from, and/or send commands and/or configuration changes to, the respective industrial automation device.

A topology service runs on-prem in the OT network (e.g., via a discovery tool on one or more of the edge devices), as well as in the cloud, to identify industrial automation devices on the OT network via a discovery process. Discovery data is collected and sent to an instantiation of the topology service in the cloud or a twin management service running in the cloud. The discovery data may be processed to identify industrial automation devices that are being seen by multiple edge devices and thus appear multiple times in the discovery data. The twin management service pings a catalog service for more information about discovered industrial automation devices on the OT network that appear in the discovery data. The twin management service determines whether or not device twins exist for the discovered devices and, if not, whether a device twin should be created. Device twins may be created for a discovered industrial automation device, for example, because there is a policy in place to automatically create twins under certain conditions, because some other application has specifically requested a device twin, and so forth. Upon determining that a new device twin should be created, the twin management service creates a device twin for the discovered industrial automation device. Based on certain metadata (e.g., a data model, policies/preferences specifying how often certain pieces of data are to be replicated), and the device type (e.g., controller, drive, I/O module, etc.), as determined by the twin management service based on the discovery data, data from the topology service, data from the catalog service, data from the discovered industrial automation device, and so forth, the twin management service maintains the device twin to act as a common interface for applications to interact with the real discovered industrial automation device without having to worry about managing communications. Accordingly, a single device twin may be shared by multiple applications that wish to access the respective industrial automation device. The twin management service may monitor the industrial automation device (e.g., via the topology service) to determine if anything happens to the industrial automation device or if any characteristics of the industrial automation device change (e.g., firmware updates, changes to operating parameters, etc.) that should be reflected in the device twin. The twin management service may also monitor the catalog service to identify when new metadata is available for the industrial automation device.

In some embodiments, these techniques may be used to generate a device twin to represent an older industrial automation device (e.g., a "legacy" device) to enable applications that are more recent than the industrial automation device to interact with the industrial automation device. In such an embodiment, a translation layer may be present (e.g., as part of the device twin, the twin management service, a twin interface, etc.) to allow interaction between the application and the legacy device.

In some embodiments, a customer may wish to run applications that interact with device twins in the cloud and on prem (or on-prem only) with similar functionality. In such cases, the twin management service may deploy and maintain duplicate twins on prem (e.g., on an edge device) and in the cloud. The twin management service may be configured to replicate data between the cloud-based and on-prem device twins. Accordingly, device twin replication between a cloud-based device twin and an on-prem device twin may be performed more efficiently, with respect to bandwidth and compute resources. For example, the twin management service may configure data replication such that the on-prem device twin receives high speed updates and the cloud-based twin receives bundled updates. By providing device twins at different hierarchies (e.g., on-prem and in the cloud), the various on-prem and cloud-based applications have the same programmatic interface for accessing data, such that the code base is more reusable between the applications. In one example, an on-prem human-machine interface (HMI) offering runs in a panel on a plant floor and a cloud-based HMI offering runs in the cloud. The two HMI offerings share as common a code base as possible, while also allowing differences in the way the data is accessed (e.g., the on-prem panel HMI will get data for the industrial automation device from the on-prem device twin rather than the cloud-based device twin).

In many OT networks, a single industrial automation device may be accessed by the cloud via more than one edge device. This may be as a result of network design, in order to provide high availability in edge-to-cloud communications, and so forth. In such embodiments, a twin interface may apply a set of policies to determine which edge device to use in certain circumstances. A system may be configured with default policies that are customizable by the user. With well-designed policies, a customer can ensure that edge devices are efficiently used while maintaining application performance and uptime. For example, policies could specify a preference for a wired data connection over a mobile data connection, a preference for using an edge device that is less loaded than another, a preference for using an edge device based on ping latency, available compute power, available bandwidth, a preference for using an edge device that has a less expensive data connection, using one edge device preferentially and using another edge device for failover, and so forth. Accordingly, the twin interface may facilitate communication with the industrial automation device via the selected edge device.

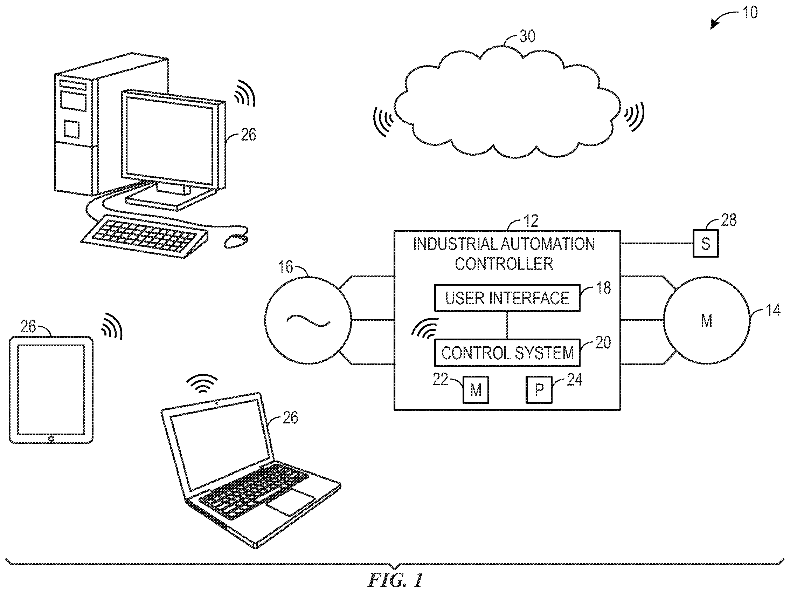

Excessive data transmission may be costly and slow down communication within the network. Controllers and drives, in particular, produce vast amounts of data. Accordingly, a smart filter disposed on the edge device would be configured to constrain what data values are reflected to the cloud and how frequently data is sent up to the cloud. Specifically, the smart filter could be utilized at the edge (e.g., running on an edge device) to optimize the way data generated by the industrial automation device is transmitted to the cloud. For example, the smart filter could be configured to prioritize the data to be transmitted to the cloud and decide what data to actually transmit based on the bandwidth available and the capacity of the cloud. The smart filter could also use machine learning algorithms to monitor for unusual conditions in the industrial automation device, and transmit data to the cloud that is out of the ordinary. In some embodiments, the smart filter may be configured to automatically classify data into types (e.g., configuration, device state, application state, alarms, etc.) and apply policies to determine what data is transmitted to the cloud and what data, if any, receives preference. The smart filter may also be configured to optimize data transmission and/or pick/filter data to transmit to the cloud. Because data being transmitted between a controller and I/O modules might not be that helpful to applications in the cloud, the smart filter may be configured to categorize data into pre-set categories and then transmit/filter/hold data based on the assigned categories. Further, data categories may also be used figure out how quickly to sample data and how quickly to transmit data to the cloud. Some data values generated by industrial automation devices change frequently, whereas other data values do not. Accordingly, the smart filter could be configured to set sampling rates based on how quickly data values change. Further, different data collection modes may have different speed rates. For example, configuration data collection rates may be slower than I/O data collection rates. In such embodiments, the smart filter may monitor data and set the collection rates. In some cases, there may be classes of collection rates, and the smart filter may be configured to set collection rates based on different factors (e.g., learning based on how quickly it actually changes, metadata from the catalog service, how the data is being used (e.g., whether the data is displayed, slow/fast, if data is being historized, etc.), the kind of automation application it is (e.g., process vs. high-speed motion), and so forth. The smart filter may be configured to allow a compute surface of the edge device, cloud compute, bandwidth, and/or storage resources to be efficiently deployed without significant input from the customer. For example, in some embodiments, there may be a base rate of speed that all data gets updated, but the collection rate increases when data is being used, such that the smart filter tunes collection rates. In some cases, the smart filter may utilize artificial intelligence and/or machine learning to lean over time and develop rules/policies applied by the smart filter. By using the smart filter, the volume of data transmitted between the OT network and the cloud may be significantly reduced, resulting in less network traffic and lower cloud computing costs. Additional details with regard to industrial automation device twins in accordance with the techniques described above will be provided below with reference to FIGS. 1-13.

By way of introduction, FIG. 1 is a schematic view of an example industrial automation system 10 in which the embodiments described herein may be implemented. As shown, the industrial automation system 10 includes a controller 12 and an actuator 14 (e.g., a motor). The industrial automation system 10 may also include, or be coupled to, a power source 16. The power source 16 may include a generator, an external power grid, a battery, or some other source of power. The controller 12 may be a stand-alone control unit that controls multiple industrial automation components (e.g., a plurality of motors 14), a controller 12 that controls the operation of a single automation component (e.g., motor 14), or a subcomponent within a larger industrial automation system 10. In the instant embodiment, the controller 12 includes a user interface 18, such as an HMI, and a control system 20, which may include a memory 22 and a processor 24. The controller 12 may include a cabinet or some other enclosure for housing various components of the industrial automation system 10, such as a motor starter, a disconnect switch, etc.

The control system 20 may be programmed (e.g., via computer readable code or instructions stored on the memory 22, such as a non-transitory computer readable medium, and executable by the processor 24) to provide signals for controlling the motor 14. In certain embodiments, the control system 20 may be programmed according to a specific configuration desired for a particular application. For example, the control system 20 may be programmed to respond to external inputs, such as reference signals, alarms, command/status signals, etc. The external inputs may originate from one or more relays or other electronic devices. The programming of the control system 20 may be accomplished through software or firmware code that may be loaded onto the internal memory 22 of the control system 20 (e.g., via a locally or remotely located computing device 26) or programmed via the user interface 18 of the controller 12. The control system 20 may respond to a set of operating parameters. The settings of the various operating parameters may determine the operating characteristics of the controller 12. For example, various operating parameters may determine the speed or torque of the motor 14 or may determine how the controller 12 responds to the various external inputs. As such, the operating parameters may be used to map control variables within the controller 12 or to control other devices communicatively coupled to the controller 12. These variables may include, for example, speed presets, feedback types and values, computational gains and variables, algorithm adjustments, status and feedback variables, programmable logic controller (PLC) control programming, and the like.

In some embodiments, the controller 12 may be communicatively coupled to one or more sensors 28 for detecting operating temperatures, voltages, currents, pressures, flow rates, and other measurable variables associated with the industrial automation system 10. With feedback data from the sensors 28, the control system 20 may keep detailed track of the various conditions under which the industrial automation system 10 may be operating. For example, the feedback data may include conditions such as actual motor speed, voltage, frequency, power quality, alarm conditions, etc. In some embodiments, the feedback data may be communicated back to the computing device 26 for additional analysis.

The computing device 26 may be communicatively coupled to the controller 12 via a wired or wireless connection. The computing device 26 may receive inputs from a user defining an industrial automation project using a native application running on the computing device 26 or using a website accessible via a browser application, a software application, or the like. The user may define the industrial automation project by writing code, interacting with a visual programming interface, inputting or selecting values via a graphical user interface, or providing some other inputs. The user may use licensed software and/or subscription services to create, analyze, and otherwise develop the project. The computing device 26 may send a project to the controller 12 for execution. Execution of the industrial automation project causes the controller 12 to control components (e.g., motor 14) within the industrial automation system 10 through performance of one or more tasks and/or processes. In some applications, the controller 12 may be communicatively positioned in a private network and/or behind a firewall, such that the controller 12 does not have communication access outside a local network and is not in communication with any devices outside the firewall, other than the computing device 26. The controller 12 may collect feedback data during execution of the project, and the feedback data may be provided back to the computing device 26 for analysis. Feedback data may include, for example, one or more execution times, one or more alerts, one or more error messages, one or more alarm conditions, one or more temperatures, one or more pressures, one or more flow rates, one or more motor speeds, one or more voltages, one or more frequencies, and so forth. The project may be updated via the computing device 26 based on the analysis of the feedback data.

The computing device 26 may be communicatively coupled to a cloud server 30 or remote server via the internet, or some other network. In one embodiment, the cloud server 30 may be operated by the manufacturer of the controller 12, a software provider, a seller of the controller 12, a service provider, operator of the controller 12, owner of the controller 12, etc. The cloud server 30 may be used to help customers create and/or modify projects, to help troubleshoot any problems that may arise with the controller 12, develop policies, or to provide other services (e.g., project analysis, enabling, restricting capabilities of the controller 12, data analysis, controller firmware updates, etc.). The remote/cloud server 30 may be one or more servers operated by the manufacturer, software provider, seller, service provider, operator, or owner of the controller 12. The remote/cloud server 30 may be disposed at a facility owned and/or operated by the manufacturer, software provider, seller, service provider, operator, or owner of the controller 12. In other embodiments, the remote/cloud server 30 may be disposed in a datacenter in which the manufacturer, software provider, seller, service provider, operator, or owner of the controller 12 owns or rents server space. In further embodiments, the remote/cloud server 30 may include multiple servers operating in one or more data center to provide a cloud computing environment.

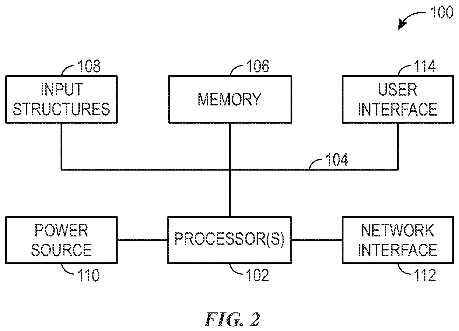

FIG. 2 illustrates a block diagram of example components of a computing device 100 that could be used as the computing device 26, the cloud/remote server 30, the controller 12, or some other device within the system 10 shown in FIG. 1. As used herein, a computing device 100 may be implemented as one or more computing systems including laptop, notebook, desktop, tablet, HMI, or workstation computers, as well as server type devices or portable, communication type devices, such as cellular telephones, network infrastructure such as edge devices, routers, switches, etc., and/or other suitable computing devices.

As illustrated, the computing device 100 may include various hardware components, such as one or more processors 102, one or more busses 104, memory 106, input structures 108, a power source 110, a network interface 112, a user interface 114, and/or other computer components useful in performing the functions described herein.

The one or more processors 102 may include, in certain implementations, microprocessors configured to execute instructions stored in the memory 106 or other accessible locations. Alternatively, the one or more processors 102 may be implemented as application-specific integrated circuits (ASICs), field-programmable gate arrays (FPGAs), and/or other devices designed to perform functions discussed herein in a dedicated manner. As will be appreciated, multiple processors 102 or processing components may be used to perform functions discussed herein in a distributed or parallel manner.

The memory 106 may encompass any tangible, non-transitory medium for storing data or executable routines. Although shown for convenience as a single block in FIG. 2, the memory 106 may encompass various discrete media in the same or different physical locations. The one or more processors 102 may access data in the memory 106 via one or more busses 104.

The input structures 108 may allow a user to input data and/or commands to the device 100 and may include mice, touchpads, touchscreens, keyboards, controllers, and so forth. The power source 110 can be any suitable source for providing power to the various components of the computing device 100, including line and battery power. In the depicted example, the device 100 includes a network interface 112. Such a network interface 112 may allow communication with other devices on a network using one or more communication protocols. In the depicted example, the device 100 includes a user interface 114, such as a display that may display images or data provided by the one or more processors 102. The user interface 114 may include, for example, a monitor, a display, and so forth. As will be appreciated, in a real-world context a processor-based system, such as the computing device 100 of FIG. 2, may be employed to implement some or all of the present approach, such as performing the functions of the controller, the computing device 26, and/or the cloud/remote server 30 shown in FIG. 1, as well as other memory-containing devices.

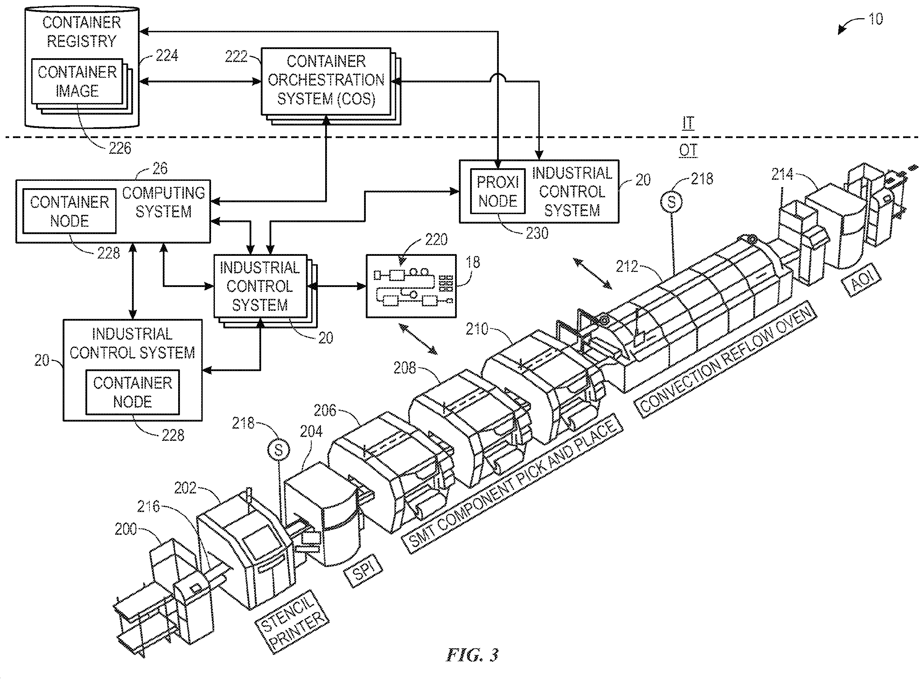

FIG. 3 is a perspective view of an example of the industrial automation system 10 of FIG. 1. The industrial automation system 10 includes stations 200, 202, 204, 206, 208, 210, 212, 214 having machine components and/or machines to conduct functions within an automated process, such as printed circuit board assembly, as is depicted. The automated process may begin at a station 200 used for loading objects, such as substrates, into the industrial automation system 10 via a conveyor section 216. For example, objects may be transported along the conveyor section 216 to station 202 to perform a first action, such a printing solder paste to the substrate via stenciling. As objects exit from the station 202, the objects may be transported via the conveyor section 216 to a station 204 for solder paste inspection (SPI) to inspect printer results, to a station 206, 208, and 210 for surface mount technology (SMT) component placement, to a station 212 for convection reflow oven to melt the solder to make electrical couplings, and finally to a station 214 for automated optical inspection (AOI) to inspect the object manufactured (e.g., the manufactured printed circuit board). After the objects proceed through the various stations, the objects may be removed from the station 214, for example, for storage in a warehouse or for shipment. It should be understood, however, that, for other applications, the particular system, machine components, machines, stations, and/or conveyors may be different or specially adapted to the application.

For example, the industrial automation system 10 may include machinery to perform various operations in a compressor station, an oil refinery, a batch operation for making food items, chemical processing operations, brewery operations, mining operations, a mechanized assembly line, and so forth. Accordingly, the industrial automation system 10 may include a variety of operational components, such as electric motors, valves, actuators, temperature elements, pressure sensors, or a myriad of machinery or devices used for manufacturing, processing, material handling, and other applications. The industrial automation system 10 may also include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation system 10 may also include motors, protection devices, switchgear, compressors, and the like. Each of these described operational components may correspond to and/or generate a variety of OT data regarding operation, status, sensor data, operational modes, alarm conditions, or the like, that may be desirable to output for analysis with IT data from an IT network, for storage in an IT network, for analysis with expected operation set points (e.g., thresholds), or the like.

In certain embodiments, one or more properties of the industrial automation system 10 equipment, such as the stations 200, 202, 204, 206, 208, 210, 212, 214, may be monitored and controlled by the industrial control systems 20 for regulating control variables. For example, sensing devices (e.g., sensors 218) may monitor various properties of the industrial automation system 10 and may be used by the industrial control systems 20 at least in part in adjusting operations of the industrial automation system 10 (e.g., as part of a control loop). In some cases, the industrial automation system 10 may be associated with devices used by other equipment. For instance, scanners, gauges, valves, flow meters, and the like may be disposed on or within the industrial automation system 10. Here, the industrial control systems 20 may receive data from the associated devices and use the data to perform their respective operations more efficiently. For example, a controller of the industrial automation system 10 associated with a motor drive may receive data regarding a temperature of a connected motor and may adjust operations of the motor drive based on the data.

The industrial control systems 20 may include or be communicatively coupled to the display/operator interface 18 (e.g., an HMI) and to devices of the industrial automation system 10. It should be understood that any suitable number of industrial control systems 20 may be used in a particular industrial automation system 10 embodiment. The industrial control systems 20 may facilitate representing components of the industrial automation system 10 through programming objects that may be instantiated and executed to provide simulated functionality similar or identical to the actual components, as well as visualization of the components, or both, on the display/operator interface 18. The programming objects may include code and/or instructions stored in the industrial control systems 20 and executed by processing circuitry of the industrial control systems 20. The processing circuitry may communicate with memory circuitry to permit the storage of the component visualizations.

As illustrated, a display/operator interface 18 may be configured to depict representations 220 of the components of the industrial automation system 10. The industrial control system 20 may use data transmitted by the sensors 218 to update visualizations of the components via changing one or more statuses, states, and/or indications of current operations of the components. These sensors 218 may be any suitable device adapted to provide information regarding process conditions. Indeed, the sensors 218 may be used in a process loop (e.g., control loop) that may be monitored and controlled by the industrial control system 20. As such, a process loop may be activated based on process inputs (e.g., an input from the sensor 218) or direct input from a person via the display/operator interface 18. The person operating and/or monitoring the industrial automation system 10 may reference the display/operator interface 18 to determine various statuses, states, and/or current operations of the industrial automation system 10 and/or for a particular component. Furthermore, the person operating and/or monitoring the industrial automation system 10 may adjust to various components to start, stop, power-down, power-on, or otherwise adjust an operation of one or more components of the industrial automation system 10 through interactions with control panels or various input devices.

The industrial automation system 10 may be considered a data-rich environment with several processes and operations that each respectively generate a variety of data. For example, the industrial automation system 10 may be associated with material data (e.g., data corresponding to substrate or raw material properties or characteristics), parametric data (e.g., data corresponding to machine and/or station performance, such as during operation of the industrial automation system 10), test results data (e.g., data corresponding to various quality control tests performed on a final or intermediate product of the industrial automation system 10), or the like, that may be organized and sorted as OT data. In addition, sensors 218 may gather OT data indicative of one or more operations of the industrial automation system 10 or the industrial control system 20. In this way, the OT data may be analog data or digital data indicative of measurements, statuses, alarms, or the like associated with operation of the industrial automation system 10 or the industrial control system 20.

The industrial control systems 12 described above may operate in an OT space in which OT data is used to monitor and control OT assets (e.g., industrial automation devices), such as the equipment illustrated in the stations 200, 202, 204, 206, 208, 210, 212, 214 of the industrial automation system 10 or other industrial equipment. The OT space, environment, or network generally includes direct monitoring and control operations that are coordinated by the industrial control system 20 and a corresponding OT asset. For example, a programmable logic controller (PLC) may operate in the OT network to control operations of an OT asset (e.g., drive, motor, and/or high-level controllers). The industrial control systems 20 may be specifically programmed or configured to communicate directly with the respective OT assets.

A container orchestration system 222, on the other hand, may operate in an information technology (IT) environment. That is, the container orchestration system 222 may include a cluster of multiple computing devices that coordinates an automatic process of managing or scheduling work of individual containers for applications within the computing devices of the cluster. In other words, the container orchestration system 222 may be used to automate various tasks at scale across multiple computing devices. By way of example, the container orchestration system 222 may automate tasks such as configuring and scheduling deployment of containers, provisioning and deploying containers, determining availability of containers, configuring applications in terms of the containers that they run in, scaling of containers to equally balance application workloads across an infrastructure, allocating resources between containers, performing load balancing, traffic routing, and service discovery of containers, performing health monitoring of containers, securing the interactions between containers, and the like. In any case, the container orchestration system 222 may use configuration files to determine a network protocol to facilitate communication between containers, a storage location to save logs, and the like. The container orchestration system 222 may also schedule deployment of containers into clusters and identify a host (e.g., node) that may be best suited for executing the container. After the host is identified, the container orchestration system 222 may manage the lifecycle of the container based on predetermined specifications.

With the foregoing in mind, it should be noted that containers refer to technology for packaging an application along with its runtime dependencies. That is, containers include applications that are decoupled from an underlying host infrastructure (e.g., operating system). By including the run time dependencies with the container, the container may perform in the same manner regardless of the host in which it is operating. In some embodiments, containers may be stored in a container registry 224 as container images 226. The container registry 224 may be any suitable data storage or database that may be accessible to the container orchestration system 222. The container image 226 may correspond to an executable software package that includes the tools and data employed to execute a respective application. That is, the container image 226 may include related code for operating the application, application libraries, system libraries, runtime tools, default values for various settings, and the like.

By way of example, an integrated development environment (IDE) tool may be employed by a user to create a deployment configuration file that specifies a desired state for the collection of nodes of the container orchestration system 222. The deployment configuration file may be stored in the container registry 224 along with the respective container images 226 associated with the deployment configuration file. The deployment configuration file may include a list of different pods and a number of replicas for each pod that should be operating within the container orchestration system 222 at any given time. Each pod may correspond to a logical unit of an application, which may be associated with one or more containers. The container orchestration system 222 may coordinate the distribution and execution of the pods listed in the deployment configuration file, such that the desired state is continuously met. In some embodiments, the container orchestration system 222 may include a master node that retrieves the deployment configuration files from the container registry 224, schedules the deployment of pods to the connected nodes, and ensures that the desired state specified in the deployment configuration file is met. For instance, if a pod stops operating on one node, the master node may receive a notification from the respective worker node that is no longer executing the pod and deploy the pod to another worker node to ensure that the desired state is present across the cluster of nodes.

As mentioned above, the container orchestration system 222 may include a cluster of computing devices, computing systems, or container nodes that may work together to achieve certain specifications or states, as designated in the respective container. In some embodiments, container nodes 228 may be integrated within industrial control systems 20 as shown in FIG. 3. That is, container nodes 228 may be implemented by the industrial control systems 20, such that they appear as worker nodes to the master node in the container orchestration system 222. In this way, the master node of the container orchestration system 222 may send commands to the container nodes 228 that are also configured to perform applications and operations for the respective industrial equipment.

With this in mind, the container nodes 228 may be integrated with the industrial control systems 20, such that they serve as passive-indirect participants, passive-direct participants, or active participants of the container orchestration system 222. As passive-indirect participants, the container nodes 228 may respond to a subset of all of the commands that may be issued by the container orchestration system 222. In this way, the container nodes 228 may support limited container lifecycle features, such as receiving pods, executing the pods, updating a respective filesystem to included software packages for execution by the industrial control system 20, and reporting the status of the pods to the master node of the container orchestration system 222. The limited features implementable by the container nodes 228 that operate in the passive-indirect mode may be limited to commands that the respective industrial control system 20 may implement using native commands that map directly to the commands received by the master node of the container orchestration system 222. Moreover, the container node 228 operating in the passive-indirect mode of operation may not be capable to push the packages or directly control the operation of the industrial control system 20 to execute the package. Instead, the industrial control system 20 may periodically check the file system of the container node 228 and retrieve the new package at that time for execution.

As passive-direct participants, the container nodes 228 may operate as a node that is part of the cluster of nodes for the container orchestration system 222. As such, the container node 228 may support the full container lifecycle features. That is, container node 228 operating in the passive-direct mode may unpack a container image and push the resultant package to the industrial control system 20, such that the industrial control system 20 executes the package in response to receiving it from the container node 228. As such, the container orchestration system 222 may have access to a worker node that may directly implement commands received from the master node onto the industrial control system 20.

In the active participant mode, the container node 228 may include a computing module or system that hosts an operating system (e.g., Linux) that may continuously operate a container host daemon that may participate in the management of container operations. As such, the active participant container node 228 may perform any operations that the master node of the container orchestration system 222 may perform. By including a container node 228 operating in the OT space, the container orchestration system 222 is capable of extending its management operations into the OT space. That is, the container node 228 may provision devices in the OT space, serve as a proxy node 230 to provide bi-directional coordination between the IT space and the OT space, and the like. For instance, the container node 228 operating as the proxy node 230 may intercept orchestration commands and cause industrial control system 20 to implement appropriate machine control routines based on the commands. The industrial control system 20 may confirm the machine state to the proxy node 230, which may then reply to the master node of the container orchestration system 222 on behalf of the industrial control system 20.

Additionally, the industrial control system 20 may share an OT device tree via the proxy node 230. As such, the proxy node 230 may provide the master node with state data, address data, descriptive metadata, versioning data, certificate data, key information, and other relevant parameters concerning the industrial control system 20. Moreover, the proxy node 230 may issue requests targeted to other industrial control systems 20 to control other OT devices. For instance, the proxy node 230 may translate and forward commands to a target OT device using one or more OT communication protocols, may translate and receive replies from the OT devices, and the like. As such, the proxy node 230 may perform health checks, provide configuration updates, send firmware patches, execute key refreshes, and other OT operations for other OT devices.

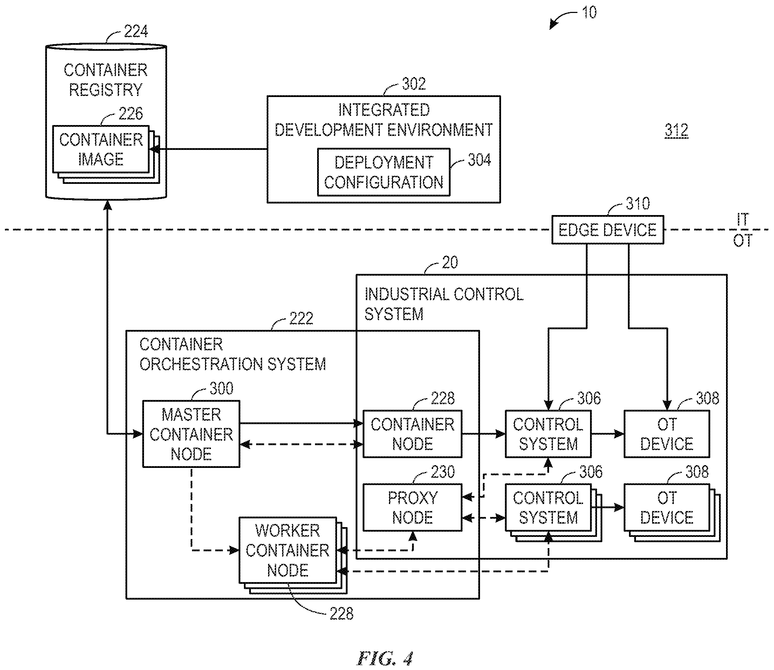

FIG. 4 illustrates a block diagram that depicts the relative positions of the container node 228 and the proxy node 230 with respect to the container orchestration system 222. As mentioned above, the container orchestration system 222 may include a collection of nodes that are used to achieve a desired state of one or more containers across multiple nodes. As shown in FIG. 4, the container orchestration system 222 may include a master node 300 that may execute control plane processes for the container orchestration system 222. The control plane processes may include the processes that enable the container orchestration system 222 to coordinate operations of the container nodes 228 to meet the desired states. As such, the master container node 300 may execute an applications programming interface (API) for the container orchestration system 222, a scheduler component, core resource controllers, and the like. By way of example, the master container node 300 may coordinate all of the interactions between nodes of the cluster that make up the container orchestration system 222. Indeed, the master container node 300 may be responsible for deciding the operations that will run on container nodes 228 including scheduling workloads (e.g., containerized applications), managing the workloads' lifecycle, scaling, and upgrades, managing network and storage resources for the workloads, and the like. The master container node 300 may run an API server to handle requests and status updates received from the container nodes 228.

By way of operation, an IDE tool 302 may be used by an operator to develop a deployment configuration file 304. As mentioned above, the deployment configuration file 304 may include details regarding the containers, the pods, constraints for operating the containers/pods, and other information that describe a desired state of the containers specified in the deployment configuration file 304. In some embodiments, the deployment configuration file 304 may be generated in a YAML file, a JSON file, or other suitable file format that is compatible with the container orchestration system 222. After the IDE tool 302 generates the deployment configuration file 304, the IDE tool 302 may transmit the deployment configuration file 304 to the container registry 224, which may store the file along with container images 226 representative of the containers stored in the deployment configuration file 304.

In some embodiments, the master container node 300 may receive the deployment configuration file 304 via the container registry 224, directly from the IDE tool 302, or the like. The master container node 300 may use the deployment configuration file 304 to determine a location to gather the container images 226, determine communication protocols to use to establish networking between container nodes 228, determine locations for mounting storage volumes, locations to store logs for the containers, and the like.

Based on the desired state provided in the deployment configuration file 304, the master container node 300 may deploy containers to the container host nodes 228. That is, the master container node 300 may schedule the deployment of a container based on constraints (e.g., CPU or memory availability) provided in the deployment configuration file 304. After the containers are operating on the container nodes 228, the master container node 300 may manage the lifecycle of the containers to ensure that the containers specified by the deployment configuration file 304 are operating according to the specified constraints and the desired state.

Keeping the foregoing in mind, the industrial control system 20 may not use an operating system (OS) that is compatible with the container orchestration system 222. That is, the container orchestration system 222 may be configured to operate in the IT space that involves the flow of digital information. In contrast, the industrial control system 20 may operate in the OT space that involves managing the operation of physical processes and the machinery used to perform those processes. For example, the OT space may involve communications that are formatted according to OT communication protocols, such as Factory Talk LiveData, EtherNet/IP, Common Industrial Protocol (CIP), OPC Direct Access (e.g., machine to machine communication protocol for industrial automation developed by the OPC Foundation), OPC Unified Architecture (OPCUA), or any suitable OT communication protocol (e.g. DNP3, Modbus, Profibus, LonWorks, DALI, BACnet, KNX, EnOcean). Because the industrial control systems 20 operate in the OT space, the industrial control systems may not be capable of implementing commands received via the container orchestration system 222.

In certain embodiments, the container node 228 may be programmed or implemented in the industrial control system 20 to serve as a node agent that can register the industrial control system 20 with the master container node 300. The node agent may or may not be the same as the proxy node 230 shown in FIG. 3. For example, the industrial control system 20 may include a PLC that cannot support an operating system (e.g., Linux) for receiving and/or implementing requested operations issued by the container orchestration system 222. However, the PLC may perform certain operations that may be mapped to certain container events. As such, the container node 228 may include software and/or hardware components that may map certain events or commands received from the master container node 300 into actions that may be performed by the PLC. After converting the received command into a command interpretable by the PLC, the container node 228 may forward the mapped command to the PLC that may implement the mapped command. As such, the container node 228 may operate as part of the cluster of nodes that make up the container orchestration system 222, while a first control system 306 (e.g., PLC) that coordinates the OT operations for a second OT device 308 in the industrial control system 12. The first control system 306 may include a controller, such as a PLC, an HLC, a programmable automation controller (PAC), or any other controller that may monitor, control, and operate an industrial automation device or component.

The OT device 308 may correspond to an industrial automation device or component. The OT device 308 may include any suitable industrial device that operates in the OT space. As such, the OT device 308 may be involved in adjusting physical processes being implemented via the industrial system 10. In some embodiments, the OT device 308 may include motor control centers, motors, HMIs, operator interfaces, contactors, starters, sensors, drives, relays, protection devices, switchgear, compressors, network switches (e.g., Ethernet switches, modular-managed, fixed-managed, service-router, industrial, unmanaged, etc.) and the like. In addition, the OT device 308 may also be related to various industrial equipment such as mixers, machine conveyors, tanks, skids, specialized original equipment manufacturer machines, and the like. The OT device 308 may also be associated with devices used by the equipment such as scanners, gauges, valves, flow meters, and the like.

In the present embodiments described herein, the control system 306 may thus perform actions based on commands received from the container node 228. By mapping certain container lifecycle states into appropriate corresponding actions implementable by the control system 306, the container node 228 enables program content for the industrial control system 20 to be containerized, published to certain registries, and deployed using the master container node 300, thereby bridging the gap between the IT-based container orchestration system 222 and the OT-based industrial control system 20.

In some embodiments, the container node 228 may operate in an active mode, such that the container node may invoke container orchestration commands for other container nodes 228. For example, a proxy node 230 may operate as a proxy or gateway node that is part of the container orchestration system 222. The proxy node 230 may be implemented in a sidecar computing module that has an operating system (OS) that supports the container host daemon. In another embodiment, the proxy node 230 may be implemented directly on a core of the control system 306 that is configured (e.g., partitioned), such that the control system 306 may operate using an operating system that allows the container node 228 to execute orchestration commands and serve as part of the container orchestration system 222. In either case, the proxy node 230 may serve as a bi-directional bridge for IT/OT orchestration that enables automation functions to be performed in IT devices based on OT data and in OT devices 308 based on IT data. For instance, the proxy node 230 may acquire OT device tree data, state data for an OT device, descriptive metadata associated with corresponding OT data, versioning data for OT devices 308, certificate/key data for the OT device, and other relevant OT data via OT communication protocols. The proxy node 230 may then translate the OT data into IT data that may be formatted to enable the master container node 300 to extract relevant data (e.g., machine state data) to perform analysis operations and to ensure that the container orchestration system 222 and the connected control systems 306 are operating at the desired state. Based on the results of its scheduling operations, the master container node 300 may issue supervisory control commands to targeted OT devices via the proxy nodes 230, which may translate and forward the translated commands to the respective control system 306 via the appropriate OT communication protocol.

In addition, the proxy node 230 may also perform certain supervisory operations based on its analysis of the machine state data of the respective control system 306. As a result of its analysis, the proxy node 230 may issue commands and/or pods to other nodes that are part of the container orchestration system 222. For example, the proxy node 230 may send instructions or pods to other worker container nodes 228 that may be part of the container orchestration system 222. The worker container nodes 228 may corresponds to other container nodes 228 that are communicatively coupled to other control systems 306 for controlling other OT devices 308. In this way, the proxy node 230 may translate or forward commands directly to other control systems 306 via certain OT communication protocols or indirectly via the other worker container nodes 228 associated with the other control systems 306. In addition, the proxy node 230 may receive replies from the control systems 306 via the OT communication protocol and translate the replies, such that the nodes in the container orchestration system 222 may interpret the replies. In this way, the container orchestration system 222 may effectively perform health checks, send configuration updates, provide firmware patches, execute key refreshes, and provide other services to OT devices 308 in a coordinated fashion. That is, the proxy node 230 may enable the container orchestration system to coordinate the activities of multiple control systems 306 to achieve a collection of desired machine states for the connected OT devices 308.

As shown in FIG. 4, the industrial automation system 10 may include one or more edge devices 310 that interact with OT assets 306, 308 within the industrial automation system 10. As used herein, an "edge device" 310 is a device within the industrial automation system 10 that controls data flow within the industrial automation system 10 (e.g., the OT network) as well as between the industrial automation system 10 (e.g., the OT network) and an IT network 312. For example, the edge device 310 may be a router, a switch, or the like. In certain embodiments, the edge device 310 may receive data from the network 312 that may include, for example, an enterprise system, a server device, a plant management system, or the like. The enterprise system may include software and/or hardware components that support business processes, information flows, reporting, data analytics, and the like for an enterprise. The server device may manage communication between the components of the industrial automation system 10. The plant management system may include any suitable management computing system that receives data from a number of control systems (e.g., industrial control systems 20). As such, the plant management system may track operations of one or more facilities and one or more locations. In addition, the plant management system may issue control commands to the components of the industrial automation system 10.

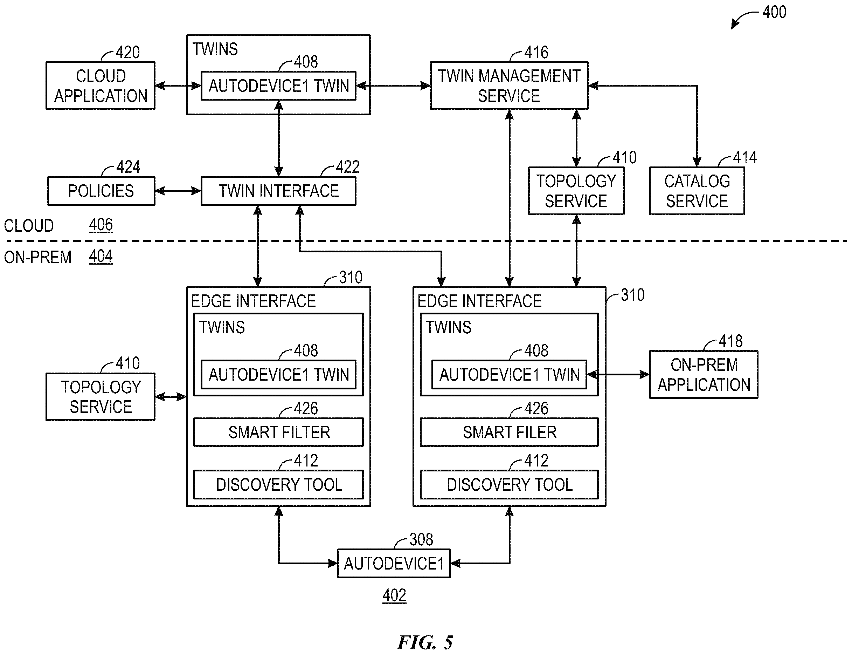

In some instances, multiple devices and/or applications running on-prem or in the cloud may attempt to interact with (e.g., retrieve/request data from, send commands to, send configuration changes to, etc.) one or more OT devices 308. This may result in multiple parallel communication channels and excessive communication traffic across the IT and/or OT networks, which may slow the IT and/or OT network and/or cause response times to increase. Accordingly, the present disclosure relates to techniques for creating and maintaining device twins for real OT devices that can act as an interface for other devices and/or applications to access and/or interact directly with the OT device 308. As used herein, a device twin is a digital representation of a real OT device 308 that provides applications and/or other devices with the current state of the OT device 308 and acts as a common interface for sending commands and configuration changes to the real OT device 308. A device twin may be distinct from a digital twin in that a digital twin may or may not correspond to a real device and/or a digital twin may be used to simulate possible variations or modifications to a real device that may not have actually been implemented or may otherwise be different from the actual conditions of the real device. Though a device twin is distinct from a digital twin, it should be understood that the device twin may interact with a broader network of one or more digital twins. Accordingly, FIG. 5 is a schematic of an architecture 400 for implementing device twins for OT devices 308. As shown, an OT device 308 (e.g., an industrial automation device such as motor control centers, motors, HMIs, operator interfaces, contactors, starters, drives, relays, protection devices, switchgear, compressors, and the like) operates in an OT environment 402. The OT device 308 may be in communication with one or more edge interfaces 310 (e.g., edge devices), which may act as interfaces between the OT environment and the IT environment, which may include an on-prem environment 404 and a cloud environment 406. Accordingly, the OT device 308 may interface with the cloud via the one or more edge devices 310. In some embodiments, an edge device 310 may be incorporated to the OT device 308 (e.g., in the same housing as, or otherwise housed within, the OT device 308). In other embodiments, the edge device 310 may be separate from the OT device 308 and communicate with the OT device 308 via a wired or wireless connection.

In some embodiments, as will be described in more detail below, a device twin 408 corresponding to the OT device 308 may run on the edge device 310, whereas in other embodiments, the device twin 408 corresponding to the OT device 308 may run exclusively in the cloud environment 406. Accordingly, a device twin 408 corresponding to a particular OT device 308 may run in the cloud environment 406, on-prem 404, or both.

A topology service 410 may operate in the on-prem environment 404 (e.g., on the edge device 310, on the OT device 308, or on another computing device, such as an on-prem server, a terminal, a desktop computer, a laptop computer, a tablet, a mobile device, an HMI, etc.), or in the cloud environment 406 and be configured to identify OT devices and/or IT devices running on the network. In some embodiments, the topology service 410 may utilize a discovery tool 412 running on the edge devices 310 and configured to ping devices operating on the IT and/or OT network to request information (e.g., discovery data) from those devices. The requested information may include information about the equipment (e.g., make, model, etc.), firmware version, operating system data, data about port status, data about software running on the device, information about hardware or software with which the discovered device is in communication, software being used, processes being run, use data, and so forth. Accordingly, new devices may be identified based on discovery data from known devices. In some embodiments, the discovery tool may also monitor network traffic to identify devices running on the network and then request information from those devices.

If a discovered OT device 308 is in communication with multiple edge devices, as shown in FIG. 5, data for the OT device 308 may appear in the discovery data multiple times. Accordingly, the topology service 410 may be configured to identify duplicate data in the discovery and combine or remove the duplicate data such that the topology service 410 recognizes that the same OT device 408 appears twice in the discovery data.

A catalog service 414 may run in the cloud environment 406 and/or in the on-prem environment 404 and be configured to retrieve contextual and/or supplemental data from one or more catalog databases for hardware or software that appears in the discovery data. The one or more catalog databases may be maintained by, or maintained based on, data provided by original equipment manufacturers, machine builders, vendors/distributors, software providers, service providers, etc. Accordingly, in some embodiments, each original equipment manufacturer, machine builder, vendor/distributor, software provider, service provider, etc. may maintain their own catalog databases that may be accessible by the catalog service. In other embodiments, a enterprise operating the OT environment 402 may maintain one or more databases based on data provided by original equipment manufacturers, machine builders, vendors/distributors, software providers, service providers, etc., such as manuals, specifications, and so forth.

A twin management service 416 may receive the discovery data from the topology service and the catalog data from the catalog service, compare the received data to any current device twins 408, determine changes to make to the current device twins 408, including new device twins 408 to generate, and implements the changes, including creating new device twins 408. If device twins 408 are running in both the cloud environment 406 and the on-prem environment 404, the twin management service 416 may manage and synchronize device twins in both locations. One a device twin 408 is operating, the device twin 408 may be accessible by one or more devices or applications (e.g., an on-prem application 418, a cloud application 420, etc.) in place of the OT device 308. For example the on-prem application 418 and/or the cloud application 420 may retrieve/request data from, send commands to, send configuration changes to, etc. the device twin 408 instead of the physical OT device 308 operating in the OT environment 402.

In some embodiments, a twin interface 422 may act as an interface between device twins 408 running in the cloud environment 406 and the OT device 308, via the edge devices 310. For example, the twin interface 422 may communicate with the OT device 308 via the edge device(s) 310 to collect data from, and/or send commands and/or configuration changes to, the physical OT device 308. In some embodiments, the twin interface 422 may reference one or more sets of policies 424 in its performance of interfacing between the device twin(s) 408 and the physical OT device 308. For example, the one or more sets of policies may dictate how often to transmit data, how to route data through the IT/OT networks, and so forth. Further, in some embodiments, the edge devices 310 may be equipped with smart filters 426 configured to constrain what data values are reflected to the cloud environment 406 and how frequently data is sent to the cloud environment 406. Specifically, the smart filter 426 could be utilized at the edge (e.g., running on one or more of the edge devices 310) to optimize the way data generated by the industrial automation device 308 is transmitted to the cloud environment 406.

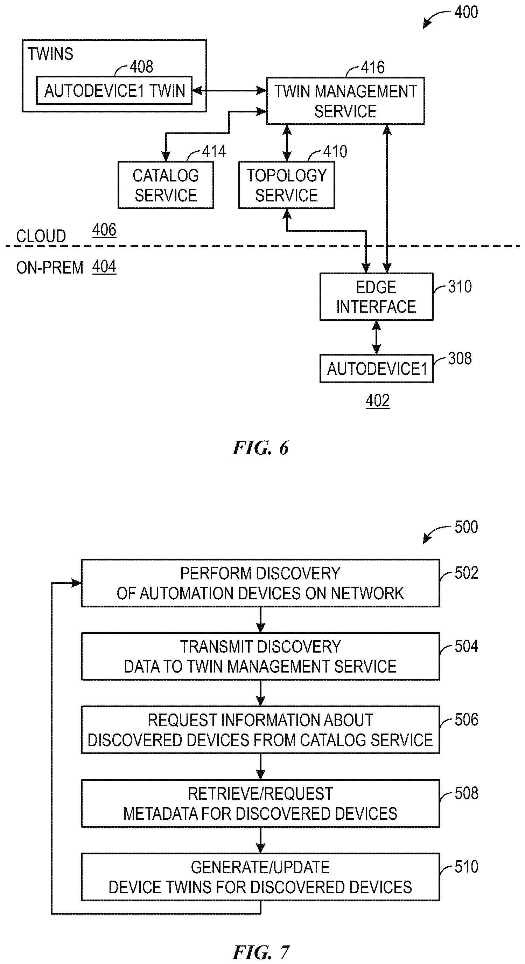

With the foregoing in mind, the FIGS. 6-13 and the corresponding description describe various particular characteristics and features or the device twin architecture 400 shown in FIG. 5.

### Generation and Maintenance of Device Twins for Industrial Devices

FIG. 6 is a schematic illustrating use of the device twin architecture 400 for generating and maintaining device twins 408. As previously described with regard to FIG. 5, the topology service 410 may run in the cloud environment 406, in the on-prem environment 404, or both (e.g., one or more instantiations of the topology service 410 running in the on-prem environment 404 and one or more instantiations of the topology service 410 running in the cloud environment 406). Accordingly, the instantiations of the topology service 410 may include software running on one or more devices or components, which may be physical or virtual in the on-prem environment 404 and/or the cloud environment 406. In some embodiments, the topology service 410 may also utilize discovery tools, which may include reduced capability software as compared to the topology service 410. The topology service 410 identifies components (e.g., industrial automation devices, OT devices, edge devices, etc.) on the OT and/or IT networks via a discovery process. For example, the topology service 410 may ping known devices, send out discovery probes within the OT and/or IT networks, and/or monitor network traffic on the OT and/or IT networks to identify hardware and/or software components operating on the network. In some embodiments, the topology service 410 may utilize one or more discovery tools running in the OT and/or IT networks to perform aspects of the discovery process. For example, discovery tools may ping devices, send discovery probes, and/or monitor network traffic, collect discovery data, and then pass the collected discovery data to an instantiation of the topology service 410 for processing. The discovery process may involve multiple steps in succession. For example, an edge device 310, which may also be referred to as an edge interface, may monitor network traffic to identify an OT device 308 on the network and then ping the OT device and/or send a discovery probe to request more information about the device. In some embodiments, various instantiations of the topology service 410, which may run in the on-prem environment 404 and/or in the cloud environment 406, may collect and/or aggregate discovery data to identify hardware and/or software running on the OT and/or IT networks. In some embodiments, processing discovery data may include, for example, identifying software or hardware that appears multiple times in the discovery data, for example, because the software or hardware is visible by multiple devices (e.g., edge devices 310) that collect discovery data, and deleting duplicative data or combining the data for the identified device to create a more complete discovery data set for the device.

The topology service 410, which may be running on the edge device 310 in the on-prem environment 404 and/or in the cloud environment 406, transmits discovery data to the twin management service 416. As previously described, the topology service 410 may do some pre-processing or processing of the discovery data before transmitting the discovery data to the twin management service 416, or the topology service 410 may transmit raw discovery data to the twin management service 416. The twin management service 416 may ping the catalog service 414 for additional information about the discovered devices. The catalog service 414 may include a database or some other data store with information about various devices that may be discoverable on the IT network and/or the OT network. For example, the catalog service 414 may store make/model information, serial number information, compatibility information, firmware version information, maintenance/service information, recall information, life cycle information, information about old or new models, and so forth. The catalog service 414 may be maintained by an original equipment manufacturer, a machine builder, a vendor, a distributor, a service provider, the enterprise operating the OT environment 402, and so forth. In some embodiments, the catalog service 414 may be operated by one of the previously listed parties (e.g., the enterprise operating the OT environment 402) based on data received from another of the previously listed parties (e.g., an original equipment manufacturer). In some embodiments, the data requested from the catalog service 414 may include metadata for the discovered devices 308. In other embodiments, the twin management service 416 may request metadata for the discovered devices 308 from the catalog service 414 separately, or request metadata for the discovered devices 308 from some other source (e.g., the devices 308 themselves, an edge device 310, etc.). The metadata for a discovered OT device 308 may include a data model, policies/preferences specifying how often certain pieces of data are to be replicated, etc.

The twin management service 416 determines, based on the received discovery data, and in some cases also based on the information received from the catalog service 414, whether or not device twins 408 exist for all of the discovered devices 308 that appear in the discovery data. For all devices 308 that appear in the discovery data but do not have corresponding device twins 408, the twin management service 416 determines whether or not to generate a device twin 408 for the discovered device 308. For example, the twin management service 416 may be configured to follow a policy that device twins 408 are automatically created when a device 308 is discovered. In other embodiments, a device twin 408 may be created for a device 308 when a device twin 408 has been specifically requested. If the twin management service 416 determines that a device twin 408 is to be generated, the twin management service 416 generates a device twin 408 for the discovered device 308 based on the discovery data, the data (e.g., metadata) received from the catalog service 414 about the discovered device 308, and/or other data associated the discovered device 308.

The twin management service 416 may also be configured to compare existing device twins 408 to data received from physical OT device 308 and update the corresponding device twins 408 to match the state of the physical OT devices 308. For example, based on certain metadata (e.g., a data model, policies/preferences specifying how often certain pieces of data are to be replicated), the device type as determined by the twin management service 416 (e.g., controller, drive, I/O module, etc.), the discovery data, data from the topology service, data from the catalog service, data from the discovered industrial automation device, and so forth, the twin management service 416 maintains the device twins 408 to act as a common interface for applications to interact with physical OT devices 308 without having to manage communications along multiple parallel paths. Accordingly, a single device twin 408 may act as a common interface for multiple applications that wish to access a single respective physical OT device 308. As such, the twin management service 416 may monitor OT devices 308 operating in the OT environment 402 via the topology service 410, determine if any characteristics of the OT devices 308 have changed (e.g., firmware updates, changes to operating parameters, state changes, changes to the configuration, etc.), and update the corresponding device twin 408 to reflect the changes. Correspondingly, the twin management service 416 may also monitor the catalog service 414 (e.g., by periodically pinging the catalog service 414 for data about OT devices 308 operating in the OT environment 402), identify when there are updates to the catalog data (e.g., new metadata available, firmware updates, recall notice, etc.), and update the device twins 408 accordingly. In some embodiments, the updates received from the catalog service 414 may warrant an update to the corresponding OT device (e.g., installing a firmware update) or a notification to an operator (e.g., notifying the operator of a recall). In such cases, the system may be configured to facilitate updates to the OT device and/or generate notifications for the operator.

In some embodiments, the twin management service 416 may be configured to generate a device twin 408 to represent an older OT device 308 (e.g., a "legacy" OT device that may have reduced capabilities compared to new OT devices 308 available on the market) to enable applications that are more recent than the OT device 308 to interact with the OT device 308 whereas such applications would otherwise be unable to communicate with the legacy OT device 308. In such an embodiment, a translation layer may be present (e.g., as part of the device twin 408, the twin management service 416, the twin interface 422 of FIG. 5, etc.) to translate between protocols and allow interaction between the application and the legacy OT device 308.

FIG. 7 is a flow chart of a process 500 for generating and maintaining device twins for OT devices. At block 502, a discovery process is performed to discover OT devices (e.g., industrial automation devices) operating on an OT network. As previously described, a topology service running on prem or in the cloud may use a discovery process to identify hardware and/or software operating on the network. In some embodiments, the topology service may utilize one or more discovery tools, which may include software applications configured to run on hardware devices within the network, to perform discovery. For example, the topology service may use a device, such as an edge device, operating in the network to monitor traffic within the network, ping known devices within the network, and/or send out discovery probes within the network. In some embodiments, the topology service (e.g., running on an edge device) may receive discovery data from one or more devices and aggregate and/or pre-process the received discovery data. This may include, for example, identifying individual devices that appear multiple times in received discovery data (e.g., because a given OT device may be visible by two or more edge devices), and removing duplicate data or combining discovery data into a single representation of the device. The aggregating and/or pre-processing may also include filtering discovery data, comparing discovery data to previous iterations to identify changes to the data, compressing data, and so forth. The discovery process may involve the topology service passing discovery data from on-prem instantiations of the topology service to cloud-based instantiations of the topology service. In some embodiments, this may include passing discovery data up a hierarchy of instantiations of the discovery tool and/or the topology service, in which one or more instantiations of the discovery tool and/or the topology service may aggregate, consolidate, and/or process discovery data before passing the discovery data up their hierarchy.

At block 504, the topology service provides the discovery data to a twin management service. In the illustrated embodiment, the twin management service runs in the cloud environment, but in some embodiments (e.g., device twins run entirely on-prem), the twin management service may run on-prem (e.g. on an on-prem server, on a workstation, on a local computer, on a mobile device, on an edge device, etc.).

At block 506, the twin management service requests additional information about the discovered devices from the catalog service. The catalog service may include a database or some other data store populated with information about various devices that may appear on the network. The catalog service may store, for example, make/model information, serial number information, compatibility information, firmware version information, maintenance/service information, recall information, life cycle information, information about old or new models, and so forth and may be maintained by an original equipment manufacturer, a machine builder, a vendor, a distributor, a service provider, the enterprise operating the OT environment, and so forth.

At block 508, metadata for the discovered devices is retrieved and/or requested and received. In some embodiments, the metadata may be requested by the twin management service from the catalog service, either with, or separate from, the catalog data. In other embodiments, the metadata for the discovered devices may be retrieved or requested from the discovered devices themselves, from an edge device in communication with the discovered device, or from some other data source. The metadata may include, for example a data model, policies/preferences specifying how often certain pieces of data are to be replicated, etc.

At block 510, device twins corresponding to the discovered devices are generated and/or updated. For example, the twin management service may determine, based on the received discovery data, and in some cases also based on the information received from the catalog service, and/or metadata, whether or not device twins exist for all of the discovered devices. For all discovered devices that do not have corresponding device twins, process 500 determines whether or not to generate a device twin for the discovered device (e.g., based on a policy that device twins are automatically created when a device is discovered, or based on a device twin being specifically requested). If a device twin 408 is to be generated, the process 500 generates a device twin for the discovered device based on the discovery data, data received from the catalog service about the discovered device, and/or metadata for the device.

The process 500 may also be configured to compare existing device twins to data received from physical OT device and update the corresponding device twins to match the state of the physical OT devices. For example, based on certain metadata (e.g., a data model, policies/preferences specifying how often certain pieces of data are to be replicated, etc.), the device type (e.g., controller, drive, I/O module, etc.), the discovery data, data from the topology service, data from the catalog service, data from the discovered industrial automation device, and so forth, the process 500 maintains the device twins to act as a common interface for applications to interact with the physical OT devices such that a single device twin may act as a common interface for multiple applications that wish to access a single respective physical OT device. As such, the process 500 may monitor OT devices, determine if any characteristics of the OT devices have changed (e.g., firmware updates, changes to operating parameters, state changes, changes to the configuration, etc.), and update the corresponding device twin to reflect the changes. The process 500 may also periodically ping the catalog service for data associated with OT devices, identify when the catalog data has changed (e.g., new metadata available, firmware updates, recall notice, etc.), and update the device twins. After the device twins have been generated and/or updated at block 510, the process may return to block 502 and start a new discovery process.

### Industrial Device Twin Replication in Different Computing Environments

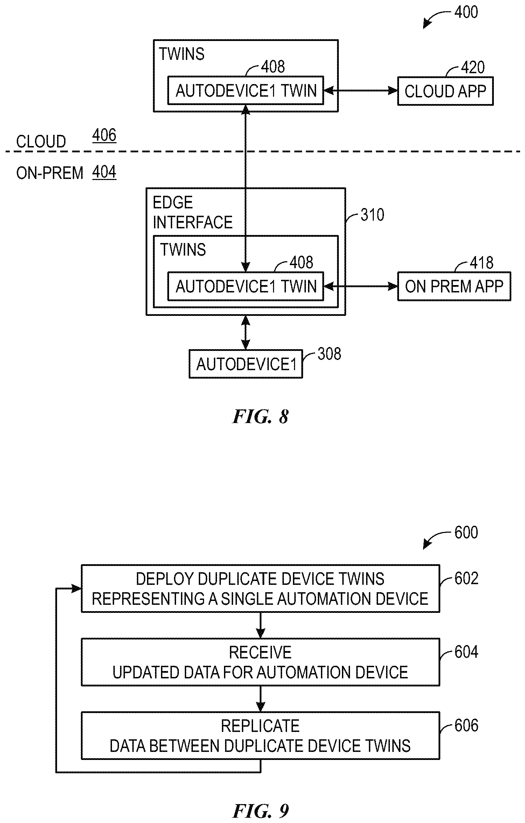

Some operators of industrial automation systems may wish to have device twins 408 running in multiple computing environments. For example, an operator may wish to run one set of device twins 408 in an on-prem environment 404 (e.g., on an edge device, a local server, a workstation, a laptop computer, a desktop computer, a tablet, a human-machine interface, a mobile device, etc.) and an additional set of device twins 408 in a cloud environment 406. Alternatively, an operator may wish to have multiple sets of device twins 408 running in the on-prem environment 404 (e.g., the operator may not wish to run device twins 408 in the cloud) and/or multiple sets of device twins 408 running in the cloud environment 406, for example, such that one set of device twins 408 can act as the primary set of device twins 408 and the other set of device twins 408 can act as a backup set of device twins 408. In other embodiments, the computing environment in which a device twin runs may be depended upon the computing environment in which an application runs that interacts with the device twin 408. For example, if an analytics software application runs the cloud environment 406, the analytics software application may be configured to interface with the device twin 408 running in the cloud environment 406. Correspondingly, if a control application runs in the on-prem environment 404, the control application may be configured to interface with the device twin 408 running in the on-prem environment 404. Accordingly, the twin management service 416 may deploy and maintain device twins 408 in multiple computing environments. With the foregoing in mind, FIG. 8 is a schematic illustrating device twin replication in multiple computing environments. Device twins 408 may be deployed by the twin management service 416 as described with regard to FIGS. 5-7 in multiple computing environments 404, 406. Though FIG. 8 illustrates a device twin 408 in the on-prem environment 404 and a device twin 408 in the cloud environment 406, it should be understood that multiple redundant device twins 408 may be deployed only in the on-prem environment 404, only in the cloud environment 406, or in both the on-prem environment 404 and the cloud environment 406. Once deployed, the twin management service 416 may replicate data between the redundant device twins 408. Data replication may be performed at specific intervals, when changes occur, upon request, continuously, etc. For example, the twin management service 416 may determine that the device twin 408 operating in the on-prem environment 404 has changed (e.g., as a result of changes to the physical OT device 308, as a result of changes made by the on-prem application 418, as a result of ambient conditions around the OT device 308, as a result of changes made by an operator, and so forth), and update the device twin 408 operating in the cloud environment 406 to reflect changes to the device twin 408 operating in the on-prem environment 404. Accordingly, both the on-prem application 418 and the cloud application 420 have access to similarly configured device twins 408, even though one device twin 408 is operating in the on-prem application 418 and the other device twin 408 is operating in the cloud environment 406.

Because data transmission speeds may be different in the on-prem environment 404 and the cloud environment 406, as well as between on-prem environment 404 and the cloud environment 406, in some embodiments, the device twin 408 running in the cloud environment 406 may update at a slower rate than the device twin 408 operating in the on-prem environment 404. Further, to conserve resources associated with transmitting data to the cloud environment 406, hosting the device twin 408 in the cloud environment 406, and/or running computing processes in the cloud environment 406, the device twin 408 running in the cloud environment 406 may be slower to update, and/or be slightly different from (e.g., require few resources to operate) the device twin 408 running in the on-prem environment 404. As such, an operator utilizing a device twin 408 in the cloud environment 406 and a device twin 408 in the on-prem environment 404 may configure the twin management service 416 to efficiently utilize bandwidth and/or available computing resources when deploying, maintaining, and replicating data between redundant device twins 408. For example, the twin management service 416 may configure data replication such that the on-prem device twin 408 receives high speed updates (e.g., from the OT device 308) and the cloud-based device twin 408 receives bundled updates (e.g., from the OT device 308). By providing device twins 408 at different hierarchies (e.g., on-prem and in the cloud), the various on-prem applications 418 and cloud-based applications 420 have the same programmatic interface for accessing data, such that the code base is partially or entirely reusable between the on-prem applications 418 and cloud-based applications 420.

In one possible embodiment, an on-prem HMI offering may run in a panel on a plant floor of the OT environment 402 (e.g., in the on-prem environment 404) and a cloud-based HMI offering runs in the cloud environment 406. The two HMI offerings may share as common a code base, or have code bases that substantially overlap with one another, while allowing differences in the way the data is accessed. For example, the on-prem panel HMI may receive data for the OT device from the device twin 408 running in the on-prem environment 404 rather than from the device twin 408 running in the cloud environment 406.

FIG. 9 is a flow chart of a process 600 for replicating data between device twins running in different computing environments. At block 602, duplicate device twins representing a single physical OT device are deployed in different computing environments. As previously described, the different computing environments may include, for example, an on-prem environment and a cloud environment, multiple on-prem environments (e.g., the duplicate device twins run on multiple different devices disposed on-prem and/or multiple different partitions or containers running on an on-prem device), multiple cloud environments (e.g., resources provided by different cloud providers, different resources provided by the same provider, different nodes/instances, etc.), and so forth. As previously described, to deploy device twins, the twin management service may determine, based on the received discovery data, information received from the catalog service, and/or metadata, that a discovered OT device does not have any corresponding device twins, or that an additional device twin should be deployed to a particular computing environment. If multiple device twins are to be generated for the discovered OT device (e.g., based on a policy, a specific request, a stated preference, certain conditions being met, etc.), the process 600 generates multiple device twins for the discovered device in different computing environments based on the discovery data, data received from the catalog service about the discovered device, and/or metadata for the device. As previously described, the different computing environments may include on-prem computing environments, cloud computing environments, as well as other computing environments.

At block 604, update data for the OT device is received. The update data may be received directly from the OT device itself, or from some other device (e.g., an edge device, another OT device, etc.) or software application (e.g., a software application running on the OT device, another OT device, an edge device, in a container running on a compute surface, etc.) that acts as an intermediary, monitors the OT device, or otherwise possesses the update data. The update data may include, for example, measurement data, operating parameters, set points, thresholds, configuration data, user data, alert/alarm/event data, input values, output values, firmware versions, software versions, timestamps, etc.

At block 606, data is replicated between the duplicate device twins. In some embodiments, the twin management service may update both, or all, of the device twins based on the received update data. In other embodiments, one device twin may have already been updated to reflect the update data and one or more other device twins are updated to reflect the update data. Data replication may be performed at specific intervals, when changes occur, upon request, continuously, etc. For example, the process 600 may determine that a first device twin has changed (e.g., as a result of changes to the physical OT device, as a result of changes made by an on-prem application, as a result of ambient conditions around the OT device, as a result of changes made by an operator, and so forth), and update one or more other device twins to reflect the changes. In some embodiments, device twins running in different environments may update at different rates. For example, to conserve resources associated with transmitting data to the cloud environment, storing data in the cloud environment, hosting device twins in the cloud environment, and/or running computing processes in the cloud environment, device twins running in the cloud environment may be slower to update, and/or be slightly different from (e.g., require few resources to operate) device twins running on-prem. As such, the process 600 may be configured to efficiently utilize bandwidth and/or available computing resources when deploying, maintaining, and replicating data between redundant device twins. For example, on-prem device twins may be configured to receive high speed updates, whereas cloud-based device twins receive bundled updates. Accordingly, device twins running in different computing environments may allow applications running in different computing environments (e.g., on-prem applications, cloud-based applications, etc.) to have the same programmatic interface for accessing data, such that the code base is partially or entirely reusable between the applications running in different computing environments.

### Edge Compute Surface Selection for Industrial Device Twins

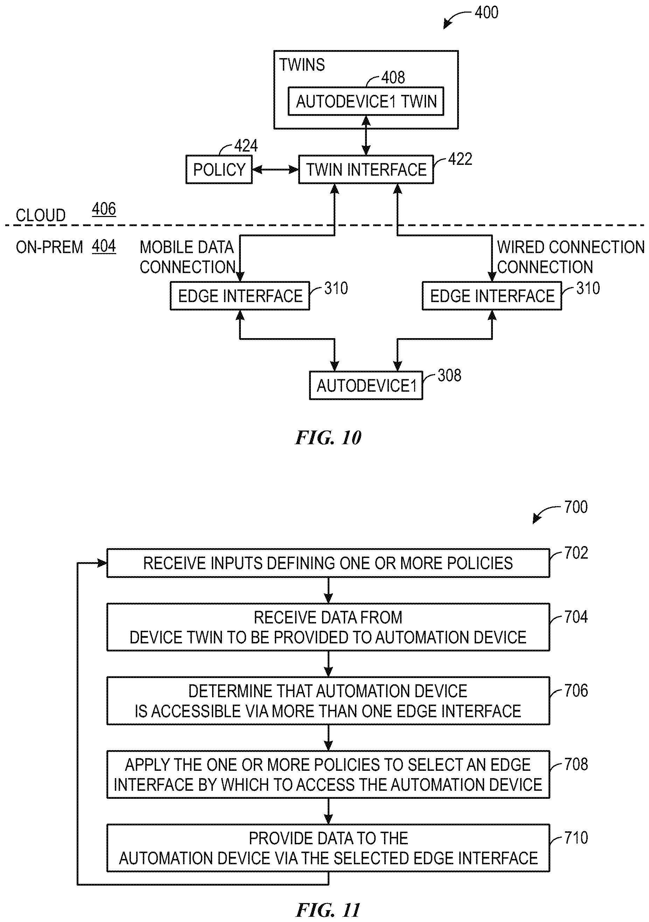

In some industrial automation systems, a single OT device may be accessed via more than one edge device. This may be as a result of network design, in order to provide high availability in edge-to-cloud communications, and so forth. Accordingly, FIG. 10 is a schematic illustrating selection of an edge compute surface for accessing an OT device 308 or performing computing operations. As shown, in some embodiments, a twin interface 422 may be configured to apply one or more policies 424 to determine which edge device 310 of the available edge devices 310 to use to access the OT device 308 or to perform one or more computing operations (e.g., data collection, data analysis, analytics, training a machine learning model, applying a machine learning model, root cause analysis, remedial action recommendations, maintenance/service analysis, updating firmware/software, performing discovery, etc.). In some embodiments a single edge device may have multiple compute surfaces. In such embodiments, the policies 424 may be applied to select a particular compute surface of an edge device 310. As shown in FIG. 10, a device twin 408 may attempt to access an OT device 308 (e.g., to collect data from the OT device 308, send commands to the OT device 308, update a configuration of the OT device 308, etc.) via a twin interface 422 and one or more edge devices 310. Though FIG. 10 shows the device twin 408 and the twin interface 422 disposed in the cloud computing environment 406, it should be understood that embodiments are envisaged in which the twin interface 422 and/or the device twin 408 may be disposed in the on-prem environment 404. Further, though a single device twin 408 is shown in FIG. 10, it should be understood that these techniques may be utilized by embodiments in which there are multiple device twins 408 corresponding to a single OT device 308. Indeed, the disclosed techniques may be used in any situations in which there are multiple paths of communication through edge devices 310 between OT devices, edge devices, applications, various services, etc. or tasks (e.g., computing tasks) to be performed by edge devices 310 that may be performed by multiple edge devices.

The twin interface 422 may apply one or more policies 424 or one or more sets of policies 424 in determining which edge device 310 to utilize. A system may come preconfigured with a set of default policies 424, but a customer may customize the policies 424 as he or she wishes by modifying the default policies or creating new policies via a policy manager interface that may run as software on a computing device (e.g., an on-prem server, a terminal, a desktop computer, a laptop computer, a tablet, a mobile device, an HMI, etc.). Further, artificial intelligence (AI) and/or machine learning (ML) algorithms may be trained over time to develop new policies or modify existing policies for improved performance. In some embodiments, service may be provided to customers to help customers customize policies for their needs. Accordingly, policies 424 may be configured such that edge devices 310 are efficiently used while maintaining application performance and uptime. For example, a policy 424 may specify a preference for a wired data connection over a mobile data connection, a preference for using an edge device that is less loaded than another, a preference for using an edge device based on ping latency, available compute power, available bandwidth, a preference for using an edge device that has a less expensive data connection, using one edge device preferentially and using another edge device for failover, and so forth. If for some reason the use of the selected edge device 310 is unsuccessful, or results in unanticipated complications, such as running slower than an unselected edge device 310, the twin interface 422 may reevaluate the edge device 310 selection and shift the communication or processes to another edge device 310 (e.g., a previously unselected edge device). Accordingly, if there are more than two available edge devices 310 or more than two available communication paths between an OT device 308 and a twin interface 422, the twin interface 422 may be configured to prioritize the available options by anticipated performance and cycle through the prioritized list if a selected option does not perform as anticipated. The twin interface 422 may be configured to reevaluate edge device 310 or path selection at specified time intervals, upon request, if performance falls below some threshold value, if performance falls a certain threshold percentage below an expected value, some condition is detected, a change is detected in the OT network (e.g., another edge device 310 has bandwidth become available, etc.)

FIG. 11 is a flow chart of a process 700 for selecting edge compute surfaces for performing operations related to industrial automation device twins. At block 702, inputs are received defining one or more policies. As previously discussed, policies may be set by default, specified by a user, and/or specified by a service provider. In some embodiments, AI and/or ML algorithms may be trained to select from available policies. Further, in some embodiments policies may be imported from a public or private policy library. Policies may be created, modified, deleted, enabled, disabled, etc. via a policy manager interface, which may run as software on a computing device (e.g., an on-prem server, a terminal, a desktop computer, a laptop computer, a tablet, a mobile device, an HMI, etc.). the policies may specify, for example, preferences between a wired data connection and a mobile data connection, preferences between edge devices based on load, preferences between edge devices based on ping latency, preferences based on available compute power, preferences based on available bandwidth, preferences based on data connection costs, using one edge device and/or compute surface preferentially and using another edge device and/or compute surface for failover, and so forth. Further, the policy manager interface may be used to enable and disable policies, set priorities, such that some policies have preference over other policies, specify conditions during which policies are applied, specify when and/or under which conditions edge device and/or compute surface selection is reevaluated, and so forth.

At block 704, the process 700 (e.g., via the twin interface) receives data from a device twin to be provided to the OT device. This may include, for example, commands to be provided to the OT device, new or updated configurations, and so forth. In some embodiments, the process 700 may also provide data and/or instructions to perform different operations to one or more edge devices. Further, the process 700 may pass data and/or commands from the OT device and/or one or more edge devices up to the twin interface and/or device twins running in the cloud or on-prem.

At block 706, the process 700 determines that multiple paths and/or compute surfaces are available. For example, the process 700 may determine (e.g., via a twin interface) that a target OT device is available via multiple edge devices. Additionally, in some embodiments, the process 700 may determine (e.g., via a twin interface) that multiple edge devices are available as a communication path from an OT device to a device twin. In another embodiment, the process 700 may determine (e.g., via a twin interface) that multiple edge devices and/or compute surfaces of edge devices are available to perform one or more operations (e.g., data collection, data analysis, analytics, training a machine learning model, applying a machine learning model, root cause analysis, remedial action recommendations, maintenance/service analysis, updating firmware/software, performing discovery, etc.).

At block 708, the process 700 may apply one or more policies to select one or more edge devices and/or compute surfaces of edge devices. As previously described, the policies may specify preferences between a wired data connection and a mobile data connection, preferences between edge devices based on load, preferences between edge devices based on ping latency, preferences based on available compute power, preferences based on available bandwidth, preferences based on real-time or near real time edge device data, preferences based on data connection costs, using one edge device and/or compute surface preferentially and using another edge device and/or compute surface for failover, and so forth. Further, policies may be enabled or disabled, prioritized such that some policies have preference over other policies, only applied when specific conditions are present, and so forth. Accordingly, applying the one or more policies may include making a determination about which policies are enabled or disabled, which policies have preference over others, etc. to determine a policy hierarchy and applying the policies according to the policy hierarchy to select one or more edge devices and/or compute surfaces. At block 710, the process 700 provides data to the one or more selected edge devices and/or compute surfaces to perform the specified operations, access the OT device, interact with the device twin, and so forth.

### Data Transmission Between Industrial Devices and Corresponding Device Twins

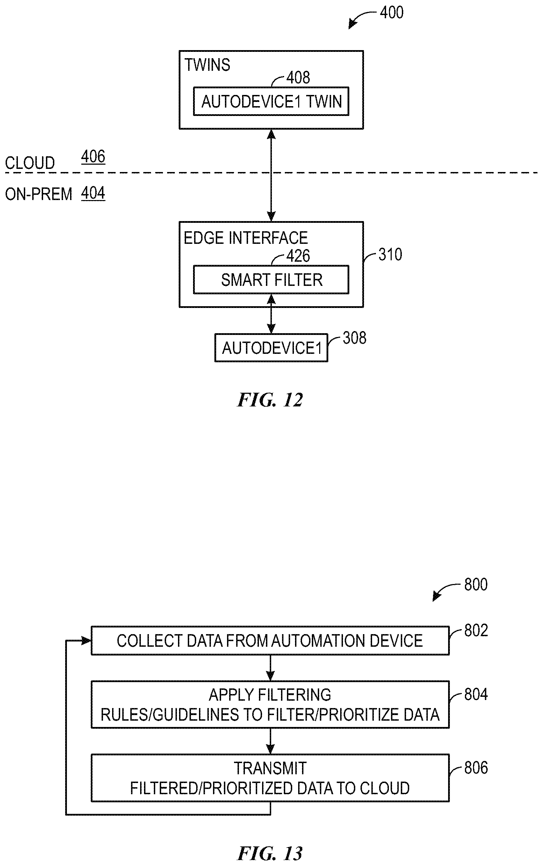

As previously discussed, in some embodiments, an OT device and one or more of its device twins may be disposed in different environments, resulting in the transmission of data between the environments. If there are costs associated with transmitting data between environments, costs associated with storing data in one or both of the environments, or other considerations, such as excessive network traffic associated with transmitting data between environments, an operator of the OT device may wish to manage communication between environments. With this in mind, FIG. 12 is a schematic illustrating managing communication between OT devices 308 and device twins 408. In the embodiment illustrated in FIG. 12, the OT device 308 is disposed in the on-prem environment 404 and the device twin 408 is operating in the cloud environment. However, it should be understood that embodiments are envisaged in which the OT device 308 and/or the device twin 408 operate in other environments. For example, the OT device 308 and the device twin 408 may operate in different on-prem environments 404 disposed remote from one another. In other embodiments, the OT device 308 and the device twin 408 may be operating in the same on-prem environment 404, but certain considerations, such as network traffic considerations, a large amount of data being generated, etc. may cause an operator to wish to manage data transmission between the OT device 308 and the device twin 408 instead of allowing unlimited transmission of data between the OT device 308 and the device twin 408. Further, if a single OT device 308 has multiple corresponding device twins 408, the presently disclosed communication management techniques may be utilized to manage data communication between the OT device 308 and one or more corresponding device twins 408.

Excessive communication and/or data transmission between an OT device 308, one or more device twins 408, and/or one or more intervening network components, such as one or more edge devices 310 may be costly and/or slow communication within a network because of excess network traffic. For example, an operator may pay a cloud service provider to transmit data from the on-prem environment 404 to the cloud environment 406 and/or from the cloud environment 406 to the on-prem environment 404. Because some industrial automation devices, such as controllers and drives, produce large amounts of data, an operator may wish to manage communication and/or data transmission within a network and/or between environments (e.g., between a cloud environment 406 and an on-prem environment 404). Accordingly, a smart filter 426 may be utilized to constrain data transmission. For example, the smart filter 426 may be configured to constrain which data is transmitted and/or how frequently data is transmitted. In the illustrated embodiment, the smart filter is instantiated as software that runs on an edge device 310. In such embodiments, the smart filter 426 software may be run natively by a processor of the edge device 310 as software installed on the edge device 310, or the smart filter 426 software may run in a container on a compute surface of the edge device 310. In some embodiments, the smart filter software 426 may run on the OT device 308 (e.g., natively installed on the OT device 310 or on a compute surface of the edge device 310). In further embodiments, the smart filter 426 may be its own piece of hardware (e.g., having a memory storing software code, a processor configured to execute the code, a communication interface configured to receive and transmit network communication, and so forth).

The smart filter 426 may be configured to run on the OT device 308 itself or an edge device 310 and receive data from the OT device 310. The smart filter 426 may apply one or more rules, guidelines, etc. to process the received data by filtering the received data, prioritizing the received data, compressing the received data, etc. and then transmit the filtered/prioritized data to an intended recipient, such as an edge device 310, a device twin 408, a cloud-based component, another OT device 310, and so forth. In some embodiments, data may be received, processed, and transmitted continuously, where as in other embodiments, data may be received, processed, and transmitted in batches. In further embodiments, the data may be received, processed, and transmitted in a mix of continuously and in batches (e.g., data may be received continuously, processed continuously or in batches, and transmitted in batches). Specifically, for example, the smart filter 426 could be utilized at the edge (e.g., running on an edge device 310) to optimize the way data generated by the OT device 308, or sensors in the OT environment, is transmitted to the cloud environment 406. For example, the smart filter could be configured to prioritize the data to be transmitted to the cloud environment 406 and decide what data to actually transmit based on the bandwidth available and the capacity of resources in the cloud environment 406.

Though the previous description describes data flowing from an OT device 308 outward to edge devices 310 and/or device twins 408, etc., it should be understood that embodiments are also envisaged in which the smart filter 426 manages data transmission flowing in the other direction (e.g., from the device twin 408 and/or an edge device 310 to an OT device 308). Accordingly, the smart filter 426 may be applied to commands and/or configuration changes directed to the OT device. Further, cloud-based instantiations of the smart filter 426 are also envisaged that could manage data transmission into and/or out of the cloud environment 406.

In some embodiments, the smart filter 426 may utilize artificial intelligence (AI) and/or machine learning (ML) to manage data transmission within the network. For example, the smart filter may receive feedback data after it has transmitted data and then train itself on the feedback data to make improved data filtering and/or prioritization decisions in the future. For example, the feedback data may include latency, whether transmitted data was received, time stamps related to data transmission, communication paths used, bandwidth, network communication loads, whether all packets were received and, if not, which packets were dropped, and so forth. The smart filter may then train itself by updating existing rules/policies/guidelines and/or creating new rules/policies/guidelines. Accordingly, the smart filter 426 could also use machine learning algorithms to monitor for unusual conditions in the industrial automation device, and transmit data to the cloud that is out of the ordinary. In some cases, the smart filter may utilize AI and/or ML to learn over time and develop rules/policies applied by the smart filter 426. By using the smart filter 426, the volume of data transmitted between the on-prem environment 404 and the cloud environment 406 may be significantly reduced, resulting in less network traffic and lower cloud computing costs.

In some embodiments, the smart filter 426 may be configured to automatically classify data into types (e.g., configuration, device state, application state, alarms, etc.) and apply policies to determine what data is to be transmitted to the cloud and what data, if any, receives preference. The smart filter 426 may also be configured to optimize data transmission and/or filter/prioritize data to transmit (e.g., to the cloud environment 406, an OT device 308, an edge device 310, etc.). For example, data transmitted between a controller and I/O modules might not be useful to applications in the cloud environment 406. Accordingly, the smart filter 426 could be configured to categorize data into pre-set categories and then transmit/filter/hold data based on the assigned categories. Further, the smart filter 426 may use data categories to figure out how quickly to sample data and how quickly to transmit data to the cloud environment 406, because some data values generated by industrial automation devices may change frequently, whereas other data values do change frequently. Accordingly, the smart filter 426 could be configured to set sampling rates based on how quickly data values change.

In some embodiments, different data collection modes may have different speed rates. For example, configuration data collection rates may be slower than I/O data collection rates. In such embodiments, the smart filter 426 may monitor data and set the collection rates. In some cases, there may be classes of collection rates. In such embodiments, the smart filter may be configured to set collection rates based on different factors (e.g., learning based on how quickly monitored data changes, metadata from the catalog service, how the data is being used (e.g., whether the data is displayed, if the data is particularly slow or fast, if data is being historized, etc.), the kind of automation application being operated (e.g., process vs. high-speed motion), and so forth).

By using AI and/or ML, the smart filter 426 could allow a compute surface of an edge device 310, cloud resources, network bandwidth, and/or storage resources to be efficiently deployed without significant input from the customer/operator. For example, in some embodiments, there may be a base rate of speed that all data gets updated, but the collection rate increases when data is being used, such that the smart filter tunes collection rates.

FIG. 13 is a flow chart of a process 800 for managing communication between OT devices and device twins. At block 802, the process receives data. In the illustrated embodiment, the data may be received from an OT device. The data may include, for example, sensor/measurement data, control signal data, data collected during performance of a process, error/alarm data, diagnostic data, input data, output data, operational parameter data, threshold data, set point data, and so forth. However, in some embodiments, data may be received from an edge device. Accordingly, the data may be being transmitted, either directly or indirectly, between the OT device and a device twin (e.g., running in the cloud or on-prem). However, embodiments are envisaged in which the received data is being transmitted to the OT device. For example, the received data may be being transmitted, either directly or indirectly, between the device twin or an edge device and an OT device. In such embodiments, the received data may include, for example, commands, configuration data, diagnostic data, test data, remedial action data, troubleshooting data, error/alarm data, operational parameter data, threshold data, set point data, and so forth.

At block 804, the process 800 applies one or more rules and/or guidelines to filter and/or prioritize the data. The rules/guidelines may be default, set by a user/administrator, determined using AI/ML, and so forth. The rules/guidelines may filter and/or prioritize the data in order to reduce the size of the data being transmitted. For example, the rules/guidelines may be applied to remove certain measured parameters from the data, remove measured data points to reduce the measurement frequency of the data, and so forth. In some embodiments, rules/guidelines may be applied to compress the received data or otherwise make the received data smaller in size. Further, the rules/guidelines may be applied to prioritize data to ensure that high priority data is transmitted, or that high priority data is transmitted before low priority data. Further, the rules/guidelines may be applied to the received data to separate received data into batches.

At block 806, the filtered/prioritized data is transmitted to an intended target or intermediary device. In the embodiment illustrated in FIG. 13, the data is transmitted to a cloud computing environment (e.g., for use by a device twin), however, in other embodiments, the data may be transmitted to an edge device or an OT device. Accordingly, the data may be being transmitted, either directly or indirectly, between the OT device and a device twin (e.g., running in the cloud or on-prem). However, embodiments are envisaged in which the received data is being transmitted to the OT device. For example, the received data may be being transmitted, either directly or indirectly, between the device twin or an edge device and an OT device.

The present techniques are directed to device twins maintained in the cloud, on-prem in an OT network, or both. A device twin is a digital representation of a corresponding physical industrial automation device. The device twin acts as a common interface for cloud applications to interact with the respective industrial automation device by, for example, receiving data from, and sending commands and/or configuration changes to, the respective industrial automation device. The industrial automation device connects to the cloud via one or more edge interfaces (e.g., edge devices), which may be separate from, or integrated into, the respective industrial automation device. In some embodiments, a device twin may be running on the edge device in addition to in the cloud or in place of a device twin running in the cloud. A topology service may be used to identify industrial automation devices on the OT network. A catalog service may provide additional information about the identified industrial automation devices. A twin management service may create and manage the device twins based on data received from the edge devices, the topology service, and the catalog service. Accordingly, one or more cloud applications may interface with the device twins instead of the with real industrial automation device itself. A twin interface may communicate with the industrial automation device via the edge device to collect data from, and/or send commands and/or configuration changes to, the respective industrial automation device.

A topology service runs on-prem in the OT network (e.g., via a discovery tool on one or more of the edge devices), as well as in the cloud, to identify industrial automation devices on the OT network via a discovery process. Discovery data is collected and sent to an instantiation of the topology service in the cloud or a twin management service running in the cloud. The discovery data may be processed to identify industrial automation devices that are being seen by multiple edge devices and thus appear multiple times in the discovery data. The twin management service pings a catalog service for more information about discovered industrial automation devices on the OT network that appear in the discovery data. The twin management service determines whether or not device twins exist for the discovered devices and, if not, whether a device twin should be created. Device twins may be created for a discovered industrial automation device, for example, because there is a policy in place to automatically create twins under certain conditions, because some other application has specifically requested a device twin, and so forth. Upon determining that a new device twin should be created, the twin management service creates a device twin for the discovered industrial automation device. Based on certain metadata (e.g., a data model, policies/preferences specifying how often certain pieces of data are to be replicated), and the device type (e.g., controller, drive, I/O module, etc.), as determined by the twin management service based on the discovery data, data from the topology service, data from the catalog service, data from the discovered industrial automation device, and so forth, the twin management service maintains the device twin to act as a common interface for applications to interact with the real discovered industrial automation device without having to worry about managing communications. Accordingly, a single device twin may be shared by multiple applications that wish to access the respective industrial automation device. The twin management service may monitor the industrial automation device (e.g., via the topology service) to determine if anything happens to the industrial automation device or if any characteristics of the industrial automation device change (e.g., firmware updates, changes to operating parameters, etc.) that should be reflected in the device twin. The twin management service may also monitor the catalog service to identify when new metadata is available for the industrial automation device.

In some embodiments, these techniques may be used to generate a device twin to represent an older industrial automation device (e.g., a "legacy" device) to enable applications that are more recent than the industrial automation device to interact with the industrial automation device. In such an embodiment, a translation layer may be present (e.g., as part of the device twin, the twin management service, a twin interface, etc.) to allow interaction between the application and the legacy device.

In some embodiments, a customer may wish to run applications that interact with device twins in the cloud and on prem (or on-prem only) with similar functionality. In such cases, the twin management service may deploy and maintain duplicate twins on prem (e.g., on an edge device) and in the cloud. The twin management service may be configured to replicate data between the cloud-based and on-prem device twins. Accordingly, device twin replication between a cloud-based device twin and an on-prem device twin may be performed more efficiently, with respect to bandwidth and compute resources. For example, the twin management service may configure data replication such that the on-prem device twin receives high speed updates and the cloud-based twin receives bundled updates. By providing device twins at different hierarchies (e.g., on-prem and in the cloud), the various on-prem and cloud-based applications have the same programmatic interface for accessing data, such that the code base is more reusable between the applications. In one example, an on-prem HMI offering runs in a panel on a plant floor and a cloud-based HMI offering runs in the cloud. The two HMI offerings share as common a code base as possible, while also allowing differences in the way the data is accessed (e.g., the on-prem panel HMI will get data for the industrial automation device from the on-prem device twin rather than the cloud-based device twin).

In many OT networks, a single industrial automation device may be accessed by the cloud via more than one edge device. This may be as a result of network design, in order to provide high availability in edge-to-cloud communications, and so forth. In such embodiments, a twin interface may apply a set of policies to determine which edge device to use in certain circumstances. A system may be configured with default policies that are customizable by the user. With well-designed policies, a customer can ensure that edge devices are efficiently used while maintaining application performance and uptime. For example, policies could specify a preference for a wired data connection over a mobile data connection, a preference for using an edge device that is less loaded than another, a preference for using an edge device based on ping latency, available compute power, available bandwidth, a preference for using an edge device that has a less expensive data connection, using one edge device preferentially and using another edge device for failover, and so forth. Accordingly, the twin interface may facilitate communication with the industrial automation device via the selected edge device.

Excessive data transmission may be costly and slow down communication within the network. Controllers and drives, in particular, produce vast amounts of data. Accordingly, a smart filter disposed on the edge device would be configured to constrain what data values are reflected to the cloud and how frequently data is sent up to the cloud. Specifically, the smart filter could be utilized at the edge (e.g., running on an edge device) to optimize the way data generated by the industrial automation device is transmitted to the cloud. For example, the smart filter could be configured to prioritize the data to be transmitted to the cloud and decide what data to actually transmit based on the bandwidth available and the capacity of the cloud. The smart filter could also use machine learning algorithms to monitor for unusual conditions in the industrial automation device, and transmit data to the cloud that is out of the ordinary. In some embodiments, the smart filter may be configured to automatically classify data into types (e.g., configuration, device state, application state, alarms, etc.) and apply policies to determine what data is transmitted to the cloud and what data, if any, receives preference. The smart filter may also be configured to optimize data transmission and/or pick/filter data to transmit to the cloud. Because data being transmitted between a controller and I/O modules might not be that helpful to applications in the cloud, the smart filter may be configured to categorize data into pre-set categories and then transmit/filter/hold data based on the assigned categories. Further, data categories may also be used figure out how quickly to sample data and how quickly to transmit data to the cloud. Some data values generated by industrial automation devices change frequently, whereas other data values do not. Accordingly, the smart filter could be configured to set sampling rates based on how quickly data values change. Further, different data collection modes may have different speed rates. For example, configuration data collection rates may be slower than I/O data collection rates. In such embodiments, the smart filter may monitor data and set the collection rates. In some cases, there may be classes of collection rates, and the smart filter may be configured to set collection rates based on different factors (e.g., learning based on how quickly it actually changes, metadata from the catalog service, how the data is being used (e.g., whether the data is displayed, slow/fast, if data is being historized, etc.), the kind of automation application it is (e.g., process vs. high-speed motion), and so forth. The smart filter may be configured to allow a compute surface of the edge device, cloud compute, bandwidth, and/or storage resources to be efficiently deployed without significant input from the customer. For example, in some embodiments, there may be a base rate of speed that all data gets updated, but the collection rate increases when data is being used, such that the smart filter tunes collection rates. In some cases, the smart filter may utilize artificial intelligence and/or machine learning to lean over time and develop rules/policies applied by the smart filter. By using the smart filter, the volume of data transmitted between the OT network and the cloud may be significantly reduced, resulting in less network traffic and lower cloud computing costs.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

**The following is a list of further preferred embodiments of the invention:**
Embodiment 1. A system, comprising:
   processing circuitry; and
   a memory, accessible by the processing circuitry, the memory storing instructions that, when executed by the processing circuitry, cause the processing circuitry to perform operations comprising:
      receiving discovery data comprising one or more characteristics of an industrial automation device of an industrial automation system configured to perform an industrial automation process, wherein the industrial automation device is communicatively coupled to an operational technology (OT) network;
      requesting, from a database, catalog data for the industrial automation device; and
      generating, based on the discovery data and the catalog data, a device twin for the industrial automation device, wherein the device twin comprises an interface by which one or more applications may interact with the industrial automation device.
Embodiment 2. The system of embodiment 1, wherein the operations comprise:
   receiving additional discovery data comprising one or more characteristics of an additional industrial automation device of the industrial automation system, wherein the additional industrial automation device is communicatively coupled to the OT network;
   requesting and receiving, from the database, additional catalog data for the additional industrial automation device; and
   generating, based on the additional discovery data and the additional catalog data, an additional device twin for the additional industrial automation device, wherein the additional device twin comprises an interface by which the one or more applications may interact with the additional industrial automation device.
Embodiment 3. The system of embodiment 1, wherein the operations comprise receiving metadata for the industrial automation device, wherein the device twin for the industrial automation device is generated based on the received metadata.
Embodiment 4. The system of embodiment 3, wherein the metadata comprises a data model, one or more policies, or any combination thereof.
Embodiment 5. The system of embodiment 1, wherein the operations comprise:
   requesting update data from the industrial automation device;
   receiving the update data from the industrial automation device, wherein the update data comprises one or more updates to the one or more characteristics of the industrial automation device; and
   updating, based on the update data, the device twin for the industrial automation device.
Embodiment 6. The system of embodiment 1, wherein the device twin runs in a cloud computing environment.
Embodiment 7. The system of embodiment 1, wherein the device twin runs at least partially on a server or a computing device disposed on-premises with the industrial automation system.
Embodiment 8. The system of embodiment 1, wherein the operations comprise requesting the discovery data from an edge device communicatively coupled to the industrial automation system via the OT network.
Embodiment 9. The system of embodiment 1, wherein the operations comprise requesting the discovery data from the industrial automation system.
Embodiment 10. A method, comprising:
   requesting discovery data from an industrial automation device of an industrial automation system configured to perform an industrial automation process, wherein the industrial automation device is communicatively coupled to an operational technology (OT) network;
   receiving the discovery data from the industrial automation device, wherein the discovery data comprises one or more characteristics of the industrial automation device;
   requesting, from a database, catalog data for the industrial automation device; and
   generating, based on the discovery data and the catalog data, a device twin for the industrial automation device, wherein the device twin comprises an interface by which one or more applications may interact with the industrial automation device.
Embodiment 11. The method of embodiment 10, comprising:
   requesting additional discovery data from an additional industrial automation device of the industrial automation system, wherein the additional industrial automation device is communicatively coupled to the OT network;
   receiving the additional discovery data from the additional industrial automation device, wherein the additional discovery data comprises one or more characteristics of the additional industrial automation device;
   requesting, from the database, additional catalog data for the additional industrial automation device; and
   generating, based on the additional discovery data and the additional catalog data, an additional device twin for the additional industrial automation device, wherein the additional device twin comprises an interface by which the one or more applications may interact with the additional industrial automation device.
Embodiment 12. The method of embodiment 10, comprising:
   requesting update data from the industrial automation device;
   receiving the update data from the industrial automation device, wherein the update data comprises one or more updates to the one or more characteristics of the industrial automation device; and
   updating, based on the update data, the device twin for the industrial automation device.
Embodiment 13. The method of embodiment 10, wherein the database is managed by an original equipment manufacturer, a machine builder, a vendor, a distributor, a service provider, an enterprise operating the industrial automation system, or any combination thereof.
Embodiment 14. The method of embodiment 10, wherein the device twin runs in a cloud computing environment.
Embodiment 15. The method of embodiment 10, wherein the device twin runs at least partially on a server or computing device disposed on-premises with the industrial automation system.
Embodiment 16. A non-transitory computer readable medium storing instructions that, when executed by processing circuitry, cause the processing circuitry to perform operations comprising:
   requesting update data for an industrial automation device of an industrial automation system configured to perform an industrial automation process, wherein the industrial automation device is communicatively coupled to an operational technology (OT) network;
   receiving the update data from the industrial automation device, wherein the update data comprises one or more characteristics of the industrial automation device; and
   updating, based on the update data, a device twin for the industrial automation device, wherein the device twin comprises an interface by which one or more applications may interact with the industrial automation device.
Embodiment 17. The non-transitory computer readable medium of embodiment 16, wherein the operations comprise requesting and receiving, from a database, catalog data for the industrial automation device, wherein the updating the device twin is based on the received catalog data.
Embodiment 18. The non-transitory computer readable medium of embodiment 16, wherein the operations comprise:
   receiving, prior to requesting the update data, discovery data comprising the one or more characteristics of the industrial automation device;
   requesting, from a database, prior to requesting the update data, catalog data for the industrial automation device; and
   generating, prior to requesting the update data, based on the discovery data and the catalog data, the device twin for the industrial automation device.
Embodiment 19. The non-transitory computer readable medium of embodiment 16, wherein the device twin runs in a cloud computing environment.
Embodiment 20. The non-transitory computer readable medium of embodiment 16, wherein the device twin runs on a server or computing device disposed on-premises with the industrial automation system.

## Claims

1. A system, comprising:
processing circuitry; and
a memory, accessible by the processing circuitry, the memory storing instructions that, when executed by the processing circuitry, cause the processing circuitry to perform operations comprising:
receiving discovery data comprising one or more characteristics of an industrial automation device of an industrial automation system configured to perform an industrial automation process, wherein the industrial automation device is communicatively coupled to an operational technology (OT) network;
requesting, from a database, catalog data for the industrial automation device; and
generating, based on the discovery data and the catalog data, a device twin for the industrial automation device, wherein the device twin comprises an interface by which one or more applications may interact with the industrial automation device.

2. The system of claim 1, wherein the operations comprise:
receiving additional discovery data comprising one or more characteristics of an additional industrial automation device of the industrial automation system, wherein the additional industrial automation device is communicatively coupled to the OT network;
requesting and receiving, from the database, additional catalog data for the additional industrial automation device; and
generating, based on the additional discovery data and the additional catalog data, an additional device twin for the additional industrial automation device, wherein the additional device twin comprises an interface by which the one or more applications may interact with the additional industrial automation device.

3. The system of claim 1 or 2, wherein the operations comprise receiving metadata for the industrial automation device, wherein the device twin for the industrial automation device is generated based on the received metadata.

4. The system of claim 3, wherein the metadata comprises a data model, one or more policies, or any combination thereof.

5. The system of one of claims 1 to 4, wherein the operations comprise:
requesting update data from the industrial automation device;
receiving the update data from the industrial automation device, wherein the update data comprises one or more updates to the one or more characteristics of the industrial automation device; and
updating, based on the update data, the device twin for the industrial automation device.

6. The system of one of claims 1 to 5, wherein the device twin runs in a cloud computing environment.

7. The system of one of claims 1 to 6, wherein the device twin runs at least partially on a server or a computing device disposed on-premises with the industrial automation system.

8. The system of one of claims 1 to 7, wherein the operations comprise requesting the discovery data from an edge device communicatively coupled to the industrial automation system via the OT network; or
wherein the operations comprise requesting the discovery data from the industrial automation system.

9. A method, comprising:
requesting discovery data from an industrial automation device of an industrial automation system configured to perform an industrial automation process, wherein the industrial automation device is communicatively coupled to an operational technology (OT) network;
receiving the discovery data from the industrial automation device, wherein the discovery data comprises one or more characteristics of the industrial automation device;
requesting, from a database, catalog data for the industrial automation device; and
generating, based on the discovery data and the catalog data, a device twin for the industrial automation device, wherein the device twin comprises an interface by which one or more applications may interact with the industrial automation device.

10. The method of claim9, comprising:
requesting additional discovery data from an additional industrial automation device of the industrial automation system, wherein the additional industrial automation device is communicatively coupled to the OT network;
receiving the additional discovery data from the additional industrial automation device, wherein the additional discovery data comprises one or more characteristics of the additional industrial automation device;
requesting, from the database, additional catalog data for the additional industrial automation device; and
generating, based on the additional discovery data and the additional catalog data, an additional device twin for the additional industrial automation device, wherein the additional device twin comprises an interface by which the one or more applications may interact with the additional industrial automation device.

11. The method of claim 9 or 10, comprising:
requesting update data from the industrial automation device;
receiving the update data from the industrial automation device, wherein the update data comprises one or more updates to the one or more characteristics of the industrial automation device; and
updating, based on the update data, the device twin for the industrial automation device.

12. The method of one of claims 9 to 11, wherein the database is managed by an original equipment manufacturer, a machine builder, a vendor, a distributor, a service provider, an enterprise operating the industrial automation system, or any combination thereof.

13. The method of one of claims 9 to 12, wherein the device twin runs in a cloud computing environment; or
wherein the device twin runs at least partially on a server or computing device disposed on-premises with the industrial automation system.

14. A non-transitory computer readable medium storing instructions that, when executed by processing circuitry, cause the processing circuitry to perform operations comprising:
requesting update data for an industrial automation device of an industrial automation system configured to perform an industrial automation process, wherein the industrial automation device is communicatively coupled to an operational technology (OT) network;
receiving the update data from the industrial automation device, wherein the update data comprises one or more characteristics of the industrial automation device; and
updating, based on the update data, a device twin for the industrial automation device, wherein the device twin comprises an interface by which one or more applications may interact with the industrial automation device.

15. The non-transitory computer readable medium of claim 14, wherein the operations comprise requesting and receiving, from a database, catalog data for the industrial automation device, wherein the updating the device twin is based on the received catalog data; or
wherein the operations comprise:
receiving, prior to requesting the update data, discovery data comprising the one or more characteristics of the industrial automation device;
requesting, from a database, prior to requesting the update data, catalog data for the industrial automation device; and
generating, prior to requesting the update data, based on the discovery data and the catalog data, the device twin for the industrial automation device; or
wherein the device twin runs in a cloud computing environment; or
wherein the device twin runs on a server or computing device disposed on-premises with the industrial automation system.
